# EUROPEAN PATENT APPLICATION

(11) **EP 4 808 264 A2**
(43) Date of publication of application: **16.09.2026**
(21) Application number: 26177416.0
(22) Date of filing: 21.07.2022
(51) Int. Cl.: H04W 76/15

(54) **BUFFER REPORT SENDING AND RECEIVING METHOD, AND APPARATUS**

(30) Priority: 23.07.2021 CN 202110838424; 17.09.2021 CN 202111093436
(62) Document number(s) of the earlier application(s) in accordance with Art. 76 EPC: 22845385.8 / 4 358 619
(71) Applicant: HUAWEI TECHNOLOGIES CO., LTD., Shenzhen, Guangdong 518129 (CN)
(72) Inventor: HUANG, Guogang, SHENZHEN, 518129 (CN); LI, Yunbo, SHENZHEN, 518129 (CN); GUO, Yuchen, SHENZHEN, 518129 (CN); GAN, Ming, SHENZHEN, 518129 (CN); LI, Yiqing, SHENZHEN, 518129 (CN)
(74) Representative: Körber, Martin Hans

(57) **Abstract**

This application provides a buffer report sending and receiving method, and an apparatus, which are applicable to a scenario in which a plurality of uplinks/downlinks are set up between a non-AP MLD and an AP MLD in a Wi-Fi system, to send data on a direct link in time, and reduce a transmission delay on the direct link. The method includes: The non-AP MLD generates a buffer report, and sends the buffer report to the AP MLD on a first uplink/downlink of the plurality of uplinks/downlinks. The buffer report is used to request duration of direct transmission performed by a first affiliated non-AP STA of the non-AP MLD on a first direct link, the first direct link is a link between a first target non-AP STA and the first affiliated non-AP STA, and the first target non-AP STA and the first affiliated non-AP STA belong to a same BSS. Correspondingly, after receiving the buffer report, the AP MLD may allocate second transmission duration to the first affiliated non-AP STA. The second transmission duration includes the duration of direct transmission performed by the first affiliated non-AP STA on the first direct link.

## Description

This application claims priority to Chinese Patent Application No. 202110838424.5, filed with the China National Intellectual Property Administration on July 23, 2021 and entitled "BUFFER REPORT SENDING AND RECEIVING METHOD, AND APPARATUS", and to Chinese Patent Application No. 202111093436.6, filed with the China National Intellectual Property Administration on September 17, 2021 and entitled "BUFFER REPORT SENDING AND RECEIVING METHOD, AND APPARATUS", both of which are incorporated herein by reference in their entireties.

### TECHNICAL FIELD

This application relates to the field of communication technologies, and in particular, to a buffer report sending and receiving method, and an apparatus.

### BACKGROUND

A wireless fidelity (wireless fidelity, Wi-Fi) system is deployed on an unlicensed spectrum, and a station (station, STA) in the system uses a channel resource through contention. After successfully contending for a channel, a station may reserve duration for data transmission. The duration is referred to as a transmission opportunity (transmission opportunity, TXOP). A station that successfully reserves a TXOP is referred to as a TXOP holder (holder). In one TXOP, only the TXOP holder can actively send data, and another station can only receive data or send a response frame of received data.

In the Institute of Electrical and Electronics Engineers (Institute of Electrical and Electronics Engineers, IEEE) 802.11be standard, a TXOP mechanism is extended as follows: An access point station (access point station, AP STA) serving as a TXOP holder may allocate a portion of duration in a reserved TXOP to a non-access point station (non-access point station, non-AP STA), so that the non-AP STA performs point-to-point (point-to-point, P2P) transmission with another non-AP STA, or sends uplink data to the AP STA in the allocated duration.

In the extended TXOP mechanism, when allocating the portion of the duration in the TXOP to the non-AP STA, the AP STA serving as the TXOP holder may need to learn of transmission duration required by the non-AP STA.

### SUMMARY

Embodiments of this application provide a buffer report sending and receiving method, and an apparatus. Therefore, an AP, corresponding to a direct link, of an AP MLD may determine to allocate duration, to an affiliated non-AP STA, that is of transmission on the direct link and that is in a TXOP obtained by the AP, to send data on the direct link in time, and reduce a transmission delay on the direct link.

According to a first aspect, a buffer report sending method is provided. The method is applied to a non-access point multi-link device non-AP MLD, and a plurality of uplinks/downlinks are set up between the non-AP MLD and an access point multi-link device AP MLD. The method includes: The non-AP MLD generates a buffer report, and sends the buffer report to the AP MLD on a first uplink/downlink of the plurality of uplinks/downlinks. The buffer report is used to request duration of direct transmission performed by a first affiliated non-access point station non-AP STA of the non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS.

Based on this solution, the non-AP MLD sends the buffer report to the AP MLD. The buffer report can be used to request the duration of direct transmission performed by the first affiliated non-AP STA of the non-AP MLD on the first direct link. Therefore, after receiving the buffer report, the AP MLD may learn of that the first affiliated non-AP STA of the non-AP MLD performs direct transmission on the first direct link, so that an affiliated non-AP STA, corresponding to the first direct link, of the AP MLD may allocate duration, to the first affiliated non-AP STA, that is of transmission on the first direct link and that is in a TXOP obtained by the affiliated non-AP STA. In this way, data can be sent on the direct link in time, and a transmission delay on the direct link can be reduced.

In some possible designs, the buffer report includes link information, and the link information indicates the first direct link.

Based on this possible design, the direct link on which direct transmission is to be performed can be indicated to the AP MLD, so that the affiliated AP corresponding to the direct link can allocate the duration, of transmission on the direct link, in the TXOP obtained by the affiliated AP.

In some possible designs, the link information is an identifier of the first direct link or a bitmap.

Based on this possible design, the direct link can be explicitly indicated based on the identifier of the direct link, or the direct link can be implicitly indicated based on the bitmap.

In some possible designs, the buffer report includes transmission duration information, the transmission duration information indicates first transmission duration, and the first transmission duration is the duration of direct transmission performed by the first affiliated non-AP STA of the non-AP MLD on the first direct link.

Based on this possible design, the transmission duration of to-be-performed direct transmission can be indicated to the AP MLD, so that the AP MLD can allocate corresponding duration for direct transmission.

In some possible designs, the first uplink/downlink is any one of the plurality of uplinks/downlinks.

Based on this possible design, the non-AP MLD may send the buffer report to the AP MLD on any uplink/downlink, to improve flexibility of sending the buffer report.

In some possible designs, the buffer report further includes buffer type information, and the buffer type information indicates that the buffer report is a buffer report corresponding to direct transmission.

Based on this possible design, that the buffer report is a buffer report corresponding to direct transmission can be indicated to the AP MLD, so that the AP MLD can allocate the transmission duration in the TXOP obtained by the affiliated AP corresponding to the direct link.

In some possible designs, the buffer report includes link information and does not include link information indicating the first direct link, transmission duration information indicates first transmission duration, and the first transmission duration is the duration of direct transmission performed by the first affiliated non-AP STA of the non-AP MLD on the first direct link.

In some possible designs, an identifier of the first uplink/downlink is the same as an identifier of the first direct link.

Based on the two possible designs, the buffer report is sent on the first uplink/downlink whose identifier is the same as the identifier of the first direct link, to implicitly indicate that the buffer report is used to request the duration of direct transmission on the first direct link. This can reduce signaling overheads.

In some possible designs, the transmission duration information includes the first transmission duration or a size of a first buffer, and the first buffer is used to cache data sent by the first affiliated non-AP STA of the non-AP MLD on the first direct link.

In some possible designs, that the non-AP MLD sends the buffer report to the AP MLD on a first uplink/downlink of the plurality of uplinks/downlinks includes: The non-AP MLD sends a management frame to the AP MLD on the first uplink/downlink of the plurality of uplinks/downlinks. The management frame includes the buffer report. Based on this possible design, the buffer report may be carried in the management frame.

In some possible designs, the management frame includes an aggregated control field, and the aggregated control field includes the buffer report. Based on this possible design, the buffer report may be carried in the aggregated control field of the management frame.

In some possible designs, a frame header of the management frame includes multi-link device information, and the multi-link device information indicates the non-AP MLD.

In some possible designs, that the non-AP MLD sends the buffer report to the AP MLD on a first uplink/downlink of the plurality of uplinks/downlinks includes: The non-AP MLD sends a data frame to the AP MLD on the first uplink/downlink of the plurality of uplinks/downlinks. The data frame includes an aggregated control field, and the aggregated control field includes the buffer report. Based on this possible design, the buffer report may be carried in the aggregated control field of the data frame.

In some possible designs, a frame header of the data frame includes multi-link device information, and the multi-link device information indicates the non-AP MLD. Based on this possible design, the non-AP MLD that requests the duration of direct transmission can be indicated to the AP MLD.

In some possible designs, that the non-AP MLD sends the buffer report to the AP MLD on a first uplink/downlink of the plurality of uplinks/downlinks may include: The non-AP MLD sends a data frame to the AP MLD on the first uplink/downlink of the plurality of uplinks/downlinks. The data frame includes a QoS control field, and the QoS control field includes the buffer report. For example, the data frame is a QoS null frame.

In some possible designs, the buffer report further includes a resource request type, and the resource request type indicates that the buffer report is a buffer report corresponding to direct transmission.

In some possible designs, a bit 7 or a bit 3 in the QoS control field of the QoS null frame is used to carry the resource request type.

According to a second aspect, a buffer report sending method is provided. The method is applied to an access point multi-link device AP MLD, and a plurality of uplinks/downlinks are set up between the AP MLD and a non-access point multi-link device non-AP MLD. The method includes: The AP MLD receives a buffer report from the non-AP MLD on a first uplink/downlink of the plurality of uplinks/downlinks. The buffer report is used to request duration of direct transmission performed by a first affiliated non-access point station non-AP STA of the non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS. Then, the AP MLD determines second transmission duration, and sends first duration indication information. The first duration indication information indicates the second transmission duration. The second transmission duration includes the duration, of direct transmission on the first direct link, that is allocated by the AP MLD to the first affiliated non-AP STA of the non-AP MLD.

Based on this solution, the buffer report received by the AP MLD can be used to request the duration of direct transmission performed by the first affiliated non-AP STA of the non-AP MLD on the first direct link. Therefore, the AP MLD may learn of that the first affiliated non-AP STA of the non-AP MLD performs direct transmission on the first direct link, so that an affiliated AP, corresponding to the first direct link, of the AP MLD may allocate duration, to the first affiliated non-AP STA, that is of transmission on the first direct link and that is in a TXOP obtained by the affiliated AP. In this way, data can be sent on the direct link in time, and a transmission delay on the direct link can be reduced.

In some possible designs, the buffer report includes link information, and the link information indicates the first direct link.

In some possible designs, the link information is an identifier of the first direct link or a bitmap.

In some possible designs, the buffer report includes transmission duration information, the transmission duration information indicates first transmission duration, and the first transmission duration is the duration of direct transmission performed by the first affiliated non-AP STA of the non-AP MLD on the first direct link.

In some possible designs, the first uplink/downlink is any one of the plurality of uplinks/downlinks.

In some possible designs, the buffer report further includes buffer type information, and the buffer type information indicates that the buffer report is a buffer report corresponding to direct transmission.

In some possible designs, the buffer report includes link information and does not include link information indicating the first direct link, transmission duration information indicates first transmission duration, and the first transmission duration is the duration of direct transmission performed by the first affiliated non-AP STA of the non-AP MLD on the first direct link.

In some possible designs, an identifier of the first uplink/downlink is the same as an identifier of the first direct link.

In some possible designs, the transmission duration information includes the first transmission duration or a size of a first buffer, and the first buffer is used to cache data sent by the first affiliated non-AP STA of the non-AP MLD on the first direct link.

In some possible designs, that the AP MLD receives a buffer report from the non-AP MLD on a first uplink/downlink of the plurality of uplinks/downlinks includes: The AP MLD receives a management frame from the non-AP MLD on the first uplink/downlink of the plurality of uplinks/downlinks. The management frame includes the buffer report.

In some possible designs, the management frame includes an aggregated control field, and the aggregated control field includes the buffer report.

In some possible designs, a frame header of the management frame includes multi-link device information, and the multi-link device information indicates the non-AP MLD.

In some possible designs, that the AP MLD receives a buffer report from the non-AP MLD on a first uplink/downlink of the plurality of uplinks/downlinks includes: The AP MLD receives a data frame from the non-AP MLD on the first uplink/downlink of the plurality of uplinks/downlinks. The data frame includes an aggregated control field, and the aggregated control field includes the buffer report.

In some possible designs, a frame header of the data frame includes multi-link device information, and the multi-link device information indicates the non-AP MLD.

In some possible designs, that the AP MLD receives a buffer report from the non-AP MLD on a first uplink/downlink of the plurality of uplinks/downlinks includes: The AP MLD receives a data frame from the non-AP MLD on the first uplink/downlink of the plurality of uplinks/downlinks. The data frame includes a QoS control field, and the QoS control field includes the buffer report. For example, the data frame is a QoS null frame.

In some possible designs, the buffer report further includes a resource request type, and the resource request type indicates that the buffer report is a buffer report corresponding to direct transmission.

In some possible designs, a bit 7 or a bit 3 in the QoS control field of the QoS null frame is used to carry the resource request type.

For technical effects brought by any possible design of the second aspect, refer to technical effects brought by corresponding designs of the first aspect. Details are not described herein again.

According to a third aspect, a communication method is provided. The method is applied to a source access point multi-link device AP MLD, and a plurality of uplinks/downlinks are set up between the source AP MLD and a non-access point multi-link device non-AP MLD. The method includes: The source AP MLD generates a basic service set transition management BTM request frame, and sends the BTM request frame to the non-AP MLD on any one of the plurality of uplinks/downlinks. The BTM request frame includes indication information, and the indication information indicates that a disassociation timer and/or a validity interval in the BTM request frame are/is in a unit of a target beacon transmission time TBTT of one of the plurality of uplinks/downlinks.

Based on this solution, the source AP MLD adds the indication information to the BTM request frame, to indicate that the disassociation timer and/or the validity interval in the BTM request frame are/is in a unit of a TBTT of one of the plurality of uplinks/downlinks. Therefore, the non-AP MLD can accurately obtain a time point of sending a disassociation frame, or a valid time of a BSS transition candidate list, to improve efficiency of BSS transition.

In some possible designs, the indication information is an identifier of one of the plurality of uplinks/downlinks, or a basic service set identifier corresponding to one of the plurality of uplinks/downlinks.

According to a fourth aspect, a communication method is provided. The method is applied to a source access point multi-link device AP MLD, and a plurality of uplinks/downlinks are set up between the source AP MLD and a non-access point multi-link device non-AP MLD. The method includes: The source AP MLD generates a basic service set transition management BTM request frame, and sends the BTM request frame to the non-AP MLD on a first uplink/downlink of the plurality of uplinks/downlinks. A disassociation timer and/or a validity interval in the BTM request frame are/is in a unit of a target beacon transmission time TBTT of the first uplink/downlink of the plurality of uplinks/downlinks.

Based on this solution, the disassociation timer and/or the validity interval in the BTM request frame are/is in a unit of a TBTT of the uplink/downlink used to transmit the BTM request frame. Therefore, the non-AP MLD can accurately obtain a time point of sending a disassociation frame, or a valid time of a BSS transition candidate list based on the uplink/downlink on which the BTM request frame is received, to improve efficiency of BSS transition.

According to a fifth aspect, a communication method is provided. The method includes: A source access point multi-link device AP MLD generates a basic service set transition management BTM request frame, and sends the BTM request frame to a non-AP MLD. The BTM request frame includes one or more neighbor report elements, and the neighbor report element indicates a candidate access point AP recommended by the source AP MLD to the non-AP MLD. When the candidate access point belongs to a candidate AP MLD, the neighbor report element includes a basic variant multi-link element, and the basic variant multi-link element includes a multi-link control field and a common information field, and does not include a link information field.

Based on this solution, when the neighbor report element in the BTM request frame carries the basic variant multi-link element indicating the AP MLD to which the candidate AP belongs, because link information does not need to be obtained during BSS transition, the basic variant multi-link element does not carry the link information field. This can reduce signaling overheads, and does not affect BSS transition.

In some possible designs, a multi-link device medium access control address present field in the multi-link control field is set to a first value, and a first present field in the multi-link control field is set to a second value. The first present field includes a link identifier information present field and a basic service set parameters change count present field, the first value indicates that the field is present in the common information field, and the second value indicates the field is not present in the common information field.

In some possible designs, when a plurality of candidate APs indicated by the plurality of neighbor report elements belong to a same candidate AP MLD, a second present field in a multi-link control field included in a first basic variant multi-link element is set to the first value, and a second present field in a multi-link control field included in a second basic variant multi-link element is set to the second value. The first basic variant multi-link element is a basic variant multi-link element included in a first neighbor report element of the plurality of neighbor report elements, the second basic variant multi-link element is a basic variant multi-link element included in a neighbor report element other than the first neighbor report element of the plurality of neighbor report elements.

In some possible designs, the second present field includes one or more of the following: a medium synchronization delay information present field, an enhanced multi-link capabilities present field, or a multi-link device capabilities present field.

Based on the possible design, when the plurality of candidate APs indicated by the same BTM request frame belong to the same AP MLD, the first neighbor report element indicating that an affiliated AP of the AP MLD is the candidate AP carries the basic variant multi-link element, and the second present field in the multi-link control field included in the basic variant multi-link element is set to the first value, and the second present field in the multi-link control field included in the basic variant multi-link element in another neighbor report element indicating that an affiliated AP of the AP MLD is the candidate AP is set to the second value. Therefore, the BTM request frame only carries one or more of the medium synchronization delay information present field, the EML capabilities present field, or the MLD present field once, to avoid repeatedly carrying a same field. This can reduce signaling overheads.

According to a sixth aspect, a buffer report sending method is provided. The method is applied to a non-access point multi-link device non-AP MLD, and a plurality of uplinks/downlinks are set up between the non-AP MLD and an access point multi-link device AP MLD. The method includes: The non-AP MLD generates a buffer report. The buffer report is used to request duration of transmission performed by a first affiliated non-access point station non-AP STA of the non-AP MLD on a first link, and the first link includes a first direct link and a first uplink/downlink. The first direct link is a link between a first target non-AP STA and the first affiliated non-AP STA of the non-AP MLD, the first uplink/downlink is a link between a first affiliated AP of the AP MLD and the first affiliated non-AP STA of the non-AP MLD, and the first target non-AP STA, the first affiliated non-AP STA of the non-AP MLD, and the first affiliated AP of the AP MLD belong to a same basic service set BSS. The non-AP MLD sends the buffer report to the AP MLD on a second uplink/downlink of the plurality of uplinks/downlinks.

Based on this solution, the non-AP MLD sends the buffer report to the AP MLD. The buffer report can be used to request total duration of transmission performed by the first affiliated non-AP STA of the non-AP MLD on the first direct link and the first uplink/downlink. Therefore, after receiving the buffer report, the AP MLD may learn of that the first affiliated non-AP STA of the non-AP MLD is to perform transmission on the first direct link and the first uplink/downlink, so that an affiliated AP, corresponding to the first direct link and the first uplink/downlink, of the AP MLD may determine to allocate duration, to the first affiliated non-AP STA, that is of transmission on the first direct link and the first uplink/downlink and that is in a TXOP obtained by the affiliated AP. In this way, data can be sent in time, and a transmission delay can be reduced.

According to a seventh aspect, a non-access point multi-link device non-AP MLD is provided. A plurality of uplinks/downlinks are set up between the non-AP MLD and an access point multi-link device AP MLD. The non-AP MLD includes a processing module and a transceiver module.

The processing module is configured to generate a buffer report. The buffer report is used to request duration of direct transmission performed by a first affiliated non-access point station non-AP STA of the non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS.

The transceiver module is configured to send the buffer report to the AP MLD on a first uplink/downlink of the plurality of uplinks/downlinks.

The non-AP MLD provided in the seventh aspect is configured to implement functions of the non-AP MLD in any one of the first aspect or the possible designs of the first aspect. For details, refer to descriptions in any one of the first aspect or the possible designs of the first aspect. Details are not described herein again.

According to an eighth aspect, an access point multi-link device AP MLD is provided. A plurality of uplinks/downlinks are set up between the AP MLD and a non-access point multi-link device non-AP MLD. The AP MLD includes a processing module and a transceiver module.

The transceiver module is configured to receive a buffer report from the non-AP MLD on a first uplink/downlink of the plurality of uplinks/downlinks. The buffer report is used to request duration of direct transmission performed by a first affiliated non-access point station non-AP STA of the non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS.

The processing module is configured to determine second transmission duration. The second transmission duration includes the duration, of direct transmission on the first direct link, that is allocated by the AP MLD to the first affiliated non-AP STA of the non-AP MLD.

The transceiver module is further configured to send first duration indication information. The first duration indication information indicates the second transmission duration.

The AP MLD provided in the eighth aspect is configured to implement functions of the AP MLD in any one of the second aspect or the possible designs of the second aspect. For details, refer to descriptions in any one of the second aspect or the possible designs of the second aspect. Details are not described herein again.

According to a ninth aspect, a source access point multi-link device AP MLD is provided. A plurality of uplinks/downlinks are set up between the source AP MLD and a non-access point multi-link device non-AP MLD. The source AP MLD includes a processing module and a transceiver module.

The processing module is configured to generate a basic service set transition management BTM request frame. The BTM request frame includes indication information, and the indication information indicates that a disassociation timer and/or a validity interval in the BTM request frame are/is in a unit of a target beacon transmission time TBTT of one of the plurality of uplinks/downlinks.

The transceiver module is configured to send the BTM request frame to the non-AP MLD on any one of the plurality of uplinks/downlinks.

The source AP MLD provided in the ninth aspect is configured to implement functions of the source AP MLD in any one of the third aspect or the possible designs of the third aspect. For details, refer to descriptions in any one of the third aspect or the possible designs of the third aspect. Details are not described herein again.

According to a tenth aspect, a source access point multi-link device AP MLD is provided. A plurality of uplinks/downlinks are set up between the source AP MLD and a non-access point multi-link device non-AP MLD. The source AP MLD includes a processing module and a transceiver module.

The processing module is configured to generate a basic service set transition management BTM request frame.

The transceiver module is configured to send the BTM request frame to the non-AP MLD on a first uplink/downlink of the plurality of uplinks/downlinks. A disassociation timer and/or a validity interval in the BTM request frame are/is in a unit of a target beacon transmission time TBTT of the first uplink/downlink of the plurality of uplinks/downlinks.

The source AP MLD provided in the tenth aspect is configured to implement functions of the source AP MLD in any one of the fourth aspect or the possible designs of the fourth aspect. For details, refer to descriptions in any one of the fourth aspect or the possible designs of the fourth aspect. Details are not described herein again.

According to an eleventh aspect, a source access point multi-link device AP MLD is provided. The source AP MLD includes a processing module and a transceiver module.

The processing module is configured to generate a basic service set transition management BTM request frame. The BTM request frame includes one or more neighbor report elements, and the neighbor report element indicates a candidate access point AP recommended by the source AP MLD to a non-AP MLD. When the candidate access point belongs to a candidate AP MLD, the neighbor report element includes a basic variant multi-link element, and the basic variant multi-link element includes a multi-link control field and a common information field, and does not include a link information field.

The transceiver module is configured to send the BTM request frame to the non-AP MLD.

The source AP MLD provided in the eleventh aspect is configured to implement functions of the source AP MLD in any one of the fifth aspect or the possible designs of the fifth aspect. For details, refer to descriptions in any one of the fifth aspect or the possible designs of the fifth aspect. Details are not described herein again.

According to a twelfth aspect, a non-access point multi-link device non-AP MLD is provided. A plurality of uplinks/downlinks are set up between the non-AP MLD and an access point multi-link device AP MLD. The non-AP MLD includes a processing circuit and an output interface that is internally connected to and communicates with the processing circuit.

The processing circuit is configured to generate a buffer report. The buffer report is used to request duration of direct transmission performed by a first affiliated non-access point station non-AP STA of the non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS.

The output interface is configured to send the buffer report to the AP MLD on a first uplink/downlink of the plurality of uplinks/downlinks.

The non-AP MLD provided in the twelfth aspect is configured to implement functions of the non-AP MLD in any one of the first aspect or the possible designs of the first aspect. For details, refer to descriptions in any one of the first aspect or the possible designs of the first aspect. Details are not described herein again.

According to a thirteenth aspect, an access point multi-link device AP MLD is provided. A plurality of uplinks/downlinks are set up between the AP MLD and a non-access point multi-link device non-AP MLD. The AP MLD includes a processing circuit and an output interface and an input interface that are internally connected to and communicate with the processing circuit.

The input interface is configured to receive a buffer report from the non-AP MLD on a first uplink/downlink of the plurality of uplinks/downlinks. The buffer report is used to request duration of direct transmission performed by a first affiliated non-access point station non-AP STA of the non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS.

The processing circuit is configured to determine second transmission duration. The second transmission duration includes the duration, of direct transmission on the first direct link, that is allocated by the AP MLD to the first affiliated non-AP STA of the non-AP MLD.

The output interface is further configured to send first duration indication information. The first duration indication information indicates the second transmission duration.

The AP MLD provided in the thirteenth aspect is configured to implement functions of the AP MLD in any one of the second aspect or the possible designs of the second aspect. For details, refer to descriptions in any one of the second aspect or the possible designs of the second aspect. Details are not described herein again.

According to a fourteenth aspect, a source access point multi-link device AP MLD is provided. A plurality of uplinks/downlinks are set up between the source AP MLD and a non-access point multi-link device non-AP MLD. The source AP MLD includes a processing circuit and an output interface that is internally connected to and communicates with the processing circuit.

The processing circuit is configured to generate a basic service set transition management BTM request frame. The BTM request frame includes indication information, and the indication information indicates that a disassociation timer and/or a validity interval in the BTM request frame are/is in a unit of a target beacon transmission time TBTT of one of the plurality of uplinks/downlinks.

The output interface is configured to send the BTM request frame to the non-AP MLD on any one of the plurality of uplinks/downlinks.

The source AP MLD provided in the fourteenth aspect is configured to implement functions of the source AP MLD in any one of the third aspect or the possible designs of the third aspect. For details, refer to descriptions in any one of the third aspect or the possible designs of the third aspect. Details are not described herein again.

According to a fifteenth aspect, a source access point multi-link device AP MLD is provided. A plurality of uplinks/downlinks are set up between the source AP MLD and a non-access point multi-link device non-AP MLD. The source AP MLD includes a processing circuit and an output interface that is internally connected to and communicates with the processing circuit.

The processing circuit is configured to generate a basic service set transition management BTM request frame.

The output interface is configured to send the BTM request frame to the non-AP MLD on a first uplink/downlink of the plurality of uplinks/downlinks. A disassociation timer and/or a validity interval in the BTM request frame are/is in a unit of a target beacon transmission time TBTT of the first uplink/downlink of the plurality of uplinks/downlinks.

The source AP MLD provided in the fifteenth aspect is configured to implement functions of the source AP MLD in any one of the fourth aspect or the possible designs of the fourth aspect. For details, refer to descriptions in any one of the fourth aspect or the possible designs of the fourth aspect. Details are not described herein again.

According to a sixteenth aspect, a source access point multi-link device AP MLD is provided. The source AP MLD includes a processing circuit and an output interface that is internally connected to and communicates with the processing circuit.

The processing circuit is configured to generate a basic service set transition management BTM request frame. The BTM request frame includes one or more neighbor report elements, and the neighbor report element indicates a candidate access point AP recommended by the source AP MLD to a non-AP MLD. When the candidate access point belongs to a candidate AP MLD, the neighbor report element includes a basic variant multi-link element, and the basic variant multi-link element includes a multi-link control field and a common information field, and does not include a link information field.

The output interface is configured to send the BTM request frame to the non-AP MLD.

The source AP MLD provided in the sixteenth aspect is configured to implement functions of the source AP MLD in any one of the fourth aspect or the possible designs of the fourth aspect. For details, refer to descriptions in any one of the fourth aspect or the possible designs of the fourth aspect. Details are not described herein again.

According to a seventeenth aspect, a non-access point multi-link device non-AP MLD is provided. A plurality of uplinks/downlinks are set up between the non-AP MLD and an access point multi-link device AP MLD. The non-AP MLD includes a processor and a transceiver that is internally connected to and communicates with the processor.

The processor is configured to generate a buffer report. The buffer report is used to request duration of direct transmission performed by a first affiliated non-access point station non-AP STA of the non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS.

The transceiver is configured to send the buffer report to the AP MLD on a first uplink/downlink of the plurality of uplinks/downlinks.

The non-AP MLD provided in the seventeenth aspect is configured to implement functions of the non-AP MLD in any one of the first aspect or the possible designs of the first aspect. For details, refer to descriptions in any one of the first aspect or the possible designs of the first aspect. Details are not described herein again.

According to an eighteenth aspect, an access point multi-link device AP MLD is provided. A plurality of uplinks/downlinks are set up between the AP MLD and a non-access point multi-link device non-AP MLD. The AP MLD includes a processor and a transceiver that is internally connected to and communicates with the processor.

The transceiver is configured to receive a buffer report from the non-AP MLD on a first uplink/downlink of the plurality of uplinks/downlinks. The buffer report is used to request duration of direct transmission performed by a first affiliated non-access point station non-AP STA of the non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS.

The processor is configured to determine second transmission duration. The second transmission duration includes the duration, of direct transmission on the first direct link, that is allocated by the AP MLD to the first affiliated non-AP STA of the non-AP MLD.

The transceiver is further configured to send first duration indication information. The first duration indication information indicates the second transmission duration.

The AP MLD provided in the eighteenth aspect is configured to implement functions of the AP MLD in any one of the second aspect or the possible designs of the second aspect. For details, refer to descriptions in any one of the second aspect or the possible designs of the second aspect. Details are not described herein again.

According to a nineteenth aspect, a source access point multi-link device AP MLD is provided. A plurality of uplinks/downlinks are set up between the source AP MLD and a non-access point multi-link device non-AP MLD. The source AP MLD includes a processor and a transceiver that is internally connected to and communicates with the processor.

The processor is configured to generate a basic service set transition management BTM request frame. The BTM request frame includes indication information, and the indication information indicates that a disassociation timer and/or a validity interval in the BTM request frame are/is in a unit of a target beacon transmission time TBTT of one of the plurality of uplinks/downlinks.

The transceiver is configured to send the BTM request frame to the non-AP MLD on any one of the plurality of uplinks/downlinks.

The source AP MLD provided in the nineteenth aspect is configured to implement functions of the source AP MLD in any one of the third aspect or the possible designs of the third aspect. For details, refer to descriptions in any one of the third aspect or the possible designs of the third aspect. Details are not described herein again.

According to a twentieth aspect, a source access point multi-link device AP MLD is provided. A plurality of uplinks/downlinks are set up between the source AP MLD and a non-access point multi-link device non-AP MLD. The source AP MLD includes a processor and a transceiver that is internally connected to and communicates with the processor.

The processor is configured to generate a basic service set transition management BTM request frame.

The transceiver is configured to send the BTM request frame to the non-AP MLD on a first uplink/downlink of the plurality of uplinks/downlinks. A disassociation timer and/or a validity interval in the BTM request frame are/is in a unit of a target beacon transmission time TBTT of the first uplink/downlink of the plurality of uplinks/downlinks.

The source AP MLD provided in the twentieth aspect is configured to implement functions of the source AP MLD in any one of the fourth aspect or the possible designs of the fourth aspect. For details, refer to descriptions in any one of the fourth aspect or the possible designs of the fourth aspect. Details are not described herein again.

According to a twenty-first aspect, a source access point multi-link device AP MLD is provided. The source AP MLD includes a processor and a transceiver that is internally connected to and communicates with the processor.

The processor is configured to generate a basic service set transition management BTM request frame. The BTM request frame includes one or more neighbor report elements, and the neighbor report element indicates a candidate access point AP recommended by the source AP MLD to a non-AP MLD. When the candidate access point belongs to a candidate AP MLD, the neighbor report element includes a basic variant multi-link element, and the basic variant multi-link element includes a multi-link control field and a common information field, and does not include a link information field.

The transceiver is configured to send the BTM request frame to the non-AP MLD.

The source AP MLD provided in the twenty-first aspect is configured to implement functions of the source AP MLD in any one of the fourth aspect or the possible designs of the fourth aspect. For details, refer to descriptions in any one of the fourth aspect or the possible designs of the fourth aspect. Details are not described herein again.

According to a twenty-second aspect, an embodiment of this application provides a computer-readable storage medium, configured to store a computer program. The computer program includes instructions used to execute any one of the first aspect or the possible implementations of the first aspect.

According to a twenty-third aspect, an embodiment of this application provides a computer-readable storage medium, configured to store a computer program. The computer program includes instructions used to execute any one of the second aspect or the possible implementations of the second aspect.

According to a twenty-fourth aspect, an embodiment of this application provides a computer-readable storage medium, configured to store a computer program. The computer program includes instructions used to execute any one of the third aspect or the possible implementations of the third aspect.

According to a twenty-fifth aspect, an embodiment of this application provides a computer-readable storage medium, configured to store a computer program. The computer program includes instructions used to execute any one of the fourth aspect or the possible implementations of the fourth aspect.

According to a twenty-sixth aspect, an embodiment of this application provides a computer-readable storage medium, configured to store a computer program. The computer program includes instructions used to execute any one of the fifth aspect or the possible implementations of the fifth aspect.

According to a twenty-seventh aspect, an embodiment of this application provides a computer program product. The computer program product includes instructions used to execute any one of the first aspect or the possible implementations of the first aspect.

According to a twenty-eighth aspect, an embodiment of this application provides a computer program product. The computer program product includes instructions used to execute any one of the second aspect or the possible implementations of the second aspect.

According to a twenty-ninth aspect, an embodiment of this application provides a computer program product. The computer program product includes instructions used to execute any one of the third aspect or the possible implementations of the third aspect.

According to a thirtieth aspect, an embodiment of this application provides a computer program product. The computer program product includes instructions used to execute any one of the fourth aspect or the possible implementations of the fourth aspect.

According to a thirty-first aspect, an embodiment of this application provides a computer program product. The computer program product includes instructions used to execute any one of the fifth aspect or the possible implementations of the fifth aspect.

According to a thirty-second aspect, an embodiment of this application provides a communication system. The communication system includes the non-AP MLD and the AP MLD provided in the seventh aspect, the twelfth aspect, or the seventeenth aspect.

According to a thirty-third aspect, an embodiment of this application provides a communication system. The communication system includes the AP MLD and the non-AP MLD provided in the eighth aspect, the thirteenth aspect, or the eighteenth aspect.

According to a thirty-fourth aspect, an embodiment of this application provides a communication system. The communication system includes the AP MLD and the non-AP MLD provided in the ninth aspect, the fourteenth aspect, or the nineteenth aspect.

According to a thirty-fifth aspect, an embodiment of this application provides a communication system. The communication system includes the AP MLD and the non-AP MLD provided in the tenth aspect, the fifteenth aspect, or the twentieth aspect.

According to a thirty-sixth aspect, an embodiment of this application provides a communication system. The communication system includes the AP MLD and the non-AP MLD provided in the eleventh aspect, the sixteenth aspect, or the twenty-first aspect.

### DESCRIPTION OF DRAWINGS

FIG. 1 is a schematic diagram of a multi-link device according to an embodiment of this application;
FIG. 2 is a schematic diagram of a structure of a multi-link element according to an embodiment of this application;
FIG. 3 is a schematic flowchart of BSS transition management according to an embodiment of this application;
FIG. 4a is a schematic diagram of a frame structure of a BTM query frame according to an embodiment of this application;
FIG. 4b is a schematic diagram of a frame structure of a BTM request frame according to an embodiment of this application;
FIG. 4c is a schematic diagram of a frame structure of a BTM response frame according to an embodiment of this application;
FIG. 5 is a schematic diagram of a time sequence of a TXOP mechanism according to an embodiment of this application;
FIG. 6a is a schematic diagram of a structure of a communication system according to an embodiment of this application;
FIG. 6b is a schematic diagram of a structure of another communication system according to an embodiment of this application;
FIG. 7 is a schematic flowchart of a buffer report sending and receiving method according to an embodiment of this application;
FIG. 8a is a schematic diagram 1 of a structure of a buffer report according to an embodiment of this application;
FIG. 8b is a schematic diagram 2 of a structure of a buffer report according to an embodiment of this application;
FIG. 9a is a schematic diagram 3 of a structure of a buffer report according to an embodiment of this application;
FIG. 9b is a schematic diagram 4 of a structure of a buffer report according to an embodiment of this application;
FIG. 10a is a schematic diagram 5 of a structure of a buffer report according to an embodiment of this application;
FIG. 10b is a schematic flowchart of another buffer report sending and receiving method according to an embodiment of this application;
FIG. 11 is a schematic flowchart of a communication method according to an embodiment of this application;
FIG. 12 is a schematic flowchart of another communication method according to an embodiment of this application;
FIG. 13 is a schematic flowchart of still another communication method according to an embodiment of this application;
FIG. 14 is a schematic diagram of a structure of a first communication apparatus according to an embodiment of this application;
FIG. 15 is a schematic diagram of a structure of a second communication apparatus according to an embodiment of this application; and
FIG. 16 is a schematic diagram of a structure of a first communication apparatus according to an embodiment of this application.

### DESCRIPTION OF EMBODIMENTS

Unless otherwise specified, "/" in the descriptions of embodiments of this application represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists. A and B may be singular or plural.

In descriptions of this application, unless otherwise specified, "a plurality of" means two or more than two. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in the embodiments of this application, terms such as "first" and "second" are used in embodiments of this application to distinguish between same items or similar items that have basically same functions and purposes. A person skilled in the art may understand that words such as "first" and "second" do not limit a quantity or an execution sequence, and words such as "first" and "second" do not indicate a definite difference. In addition, in embodiments of this application, a word such as "example" or "for example" is used to give an example, an illustration, or a description. Any embodiment or design scheme described as "example" or "for example" in the embodiments of this application should not be explained as being more preferred or having more advantages than another embodiment or design scheme. Exactly, usage of the word "example" or "for example" is intended to present a related concept in a specific manner for ease of understanding.

It may be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any proper manner. It may be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, in this application, "when" and "if" mean that corresponding processing is performed in an objective situation, are not intended to limit a time, do not require a determining action during implementation, and do not mean any other limitation.

It may be understood that "predefine" in this application may be understood as "define", "predefine", "store", "pre-store", "pre-negotiate", "pre-configure", "build into", or "pre-burn".

It may be understood that, in some scenarios, some optional features in the embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in embodiments of this application may also correspondingly implement these features or functions. Details are not described herein.

In this application, unless otherwise specified, for same or similar parts of the embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method according to an internal logical relationship thereof. The following implementations of this application are not intended to limit the protection scope of this application.

For ease of understanding of the technical solutions in embodiments of this application, the technologies related to this application are first briefly described as follows:

### 1. Multi-link device (multi-link device, MLD)

To achieve a technical objective of extremely high throughput, the next-generation wireless local area network (wireless local area network, WLAN) standard IEEE 802.11be uses the extremely high throughput (extremely high throughput, EHT) as a technical objective, and an existing key technology is multi-link (multi-link, ML) communication.

A core idea of multi-link communication is that a WLAN device that supports the next-generation IEEE 802.11 standard has a capability of sending and receiving on a plurality of frequency bands, so that a larger bandwidth can be used for transmission. This can further improve a throughput. The WLAN device that has a capability of simultaneously sending and receiving on a plurality of frequency bands may be referred to as an MLD. For example, the plurality of frequency bands include but are not limited to a 2.4 GHz frequency band, a 5 GHz frequency band, and a 6 GHz frequency band.

In this application, the MLD includes at least two affiliated (affiliated) stations (station, STA), namely, affiliated STAs. The affiliated station may be an access point station (access point station, AP STA) or a non-access point station (non-access point station, non-AP STA).

For ease of description, the AP STA is referred to as an AP for short in the following embodiments of this application. A multi-link device whose affiliated station is an AP is referred to as an AP multi-link device (AP multi-link device, AP MLD), and a multi-link device whose affiliated station is a non-AP STA may be referred to as a non-AP multi-link device (non-access point multi-link device, non-AP MLD).

In this application, each affiliated station of the MLD may set up a link for communication, so that links set up by a plurality of affiliated stations are referred to as a multi-link.

Usually, association (or setup) of a plurality of links between the non-AP MLD and the AP MLD may be implemented by exchanging a multi-link association request (multi-link association request) frame and a multi-link association response (multi-link association response) frame. Specifically, the non-AP MLD and the AP MLD may exchange, on one link, an association request frame and an association response frame that carry multi-link information, which are referred to as a multi-link association request frame and a multi-link association response frame for short. The multi-link information is carried in the multi-link association request frame and the multi-link association response frame, to implement simultaneous association of the plurality of links between the non-AP MLD and the AP MLD.

A link on which the multi-link association request frame and the multi-link association response frame are exchanged may be referred to as a transmitted link (Transmitted Link), and correspondingly, another link of the plurality of links is referred to as a non-transmitted link (Non-transmitted Link).

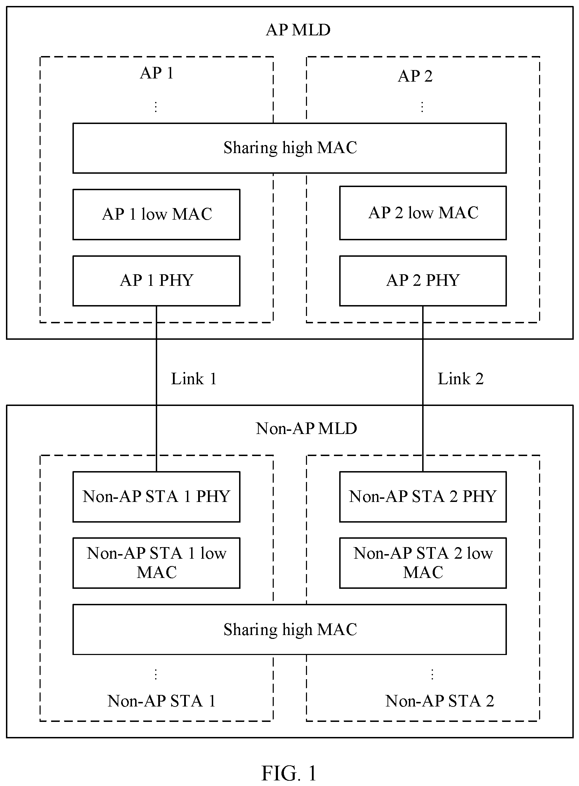

For example, as shown in FIG. 1, an AP MLD includes an affiliated AP 1 and an affiliated AP 2, and a non-AP MLD includes an affiliated non-AP STA 1 and an affiliated non-AP STA 2. Stations (AP or non-AP STA) affiliated to a same MLD share a higher medium access control (medium access control, MAC) layer, and each have an independent physical (physical, PHY) layer and a lower MAC layer. A multi-link setup procedure may include the following steps:
Step 1: The non-AP MLD sends a multi-link association request frame to the AP MLD on a link 1, where the multi-link association request frame carries non-AP STA side (namely, the non-AP STA 1) information of the link 1 and non-AP STA side (namely, the non-AP STA 2) information of a link 2. The link 1 is a transmitted link, and the link 2 is a non-transmitted link.
Step 2: The AP MLD replies to the non-AP MLD with a multi-link association response frame on the link 1, where the multi-link association response frame carries AP side (namely, the AP 1) information of the link 1 and AP side (namely, the AP 2) information of the link 2.

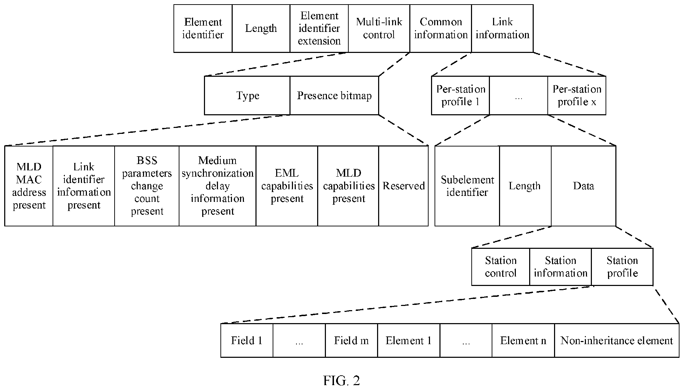

In the foregoing procedure, the protocol defines a multi-link element (multi-link element) used to carry information about the MLD and information about the station of the MLD, to carry related information of the MLD in the multi-link association request frame or the multi-link association response frame. A frame structure of the multi-link element may be shown in FIG. 2.

It should be noted that, unless otherwise specified, the station in this application is an AP or a non-AP STA. This is uniformly described herein, and details are not described in the following embodiments again.

Refer to FIG. 2. The multi-link element includes an element identifier (element identifier, element ID) field, a length (Length) field, an element identifier extension (Element ID Extension) field, a multi-link control (Multi-Link Control) field, a common information (Common Info) field, and a link information (Link info) field.

The element identifier field and the element identifier extension field are used to identify the multi-link element. Element identifier fields and element identifier extension fields of different multi-link elements are different. Usually, the element identifier field may be set to 255, and the element identifier extension field is set to a value that is not used by another multi-link element. The length field indicates a length of the multi-link element.

The multi-link control field may include a type (Type) field and a presence bitmap (Presence bitmap) field. The type field indicates a type of the multi-link element, for example, a basic variant (Basic variant) multi-link element or a probe request variant (Probe Request variant) multi-link element. The presence bitmap field may include one or more present (present) fields. Specifically, the presence bitmap field may include the following fields.

A multi-link device medium access control address (medium access control, MAC) address present (MLD MAC Address Present) field indicates whether an MLD MAC address field in the common information field is present.

A link identifier information present (Link ID Info Present) field indicates whether a link identifier information field in the common information field is present. The link identifier information field in the common information field indicates information about a transmitted link.

A basic service set (basic service set, BSS) parameters change count present (BSS Parameters Change Count Present) field indicates whether a BSS parameters change count field in the common information field is present.

A medium synchronization delay information present (Medium Synchronization Delay Information Present) field indicates whether a medium synchronization delay information field in the common information field is present.

An enhanced multi-link (enhanced multi-link, EML) capabilities present (EML Capabilities Present) field indicates whether an EML capabilities field in the common information field is present.

A multi-link device capabilities present (MLD Capabilities Present) field indicates whether a multi-link device capabilities field in the common information field is present.

For the present fields described above, usually, if the present field is set to 1, it indicates that the field indicated by the present field is present, and if the present field is set to 0, it indicates that the field indicated by the present field is not present.

It should be noted that the "present (Present) field" in this application may also be referred to as a "present field" or "existing field", and may be interchangeably used. This is not specifically limited in this application.

The common information field may further include a to-be-determined (to-be-determined, TBD) field other than the field indicated by the present field.

The link information field is used to carry related information of the non-transmitted link, and may include a per-station profile (Per-STA Profile) subelement. The per-station profile subelement may one-to-one correspond to a station on the non-transmitted link of the multi-link device.

The per-station profile subelement may include a subelement identifier (Subelement ID) field, a length (Length) field, and a data (data) field. The data field may include a station control (STA Control) field, a station information (STA Info) field, and a station profile (STA Profile) field. The station profile field may include zero or a plurality of elements (Element).

The foregoing describes the frame structure of the multi-link element and functions of some fields. For descriptions of other fields, refer to definitions in the IEEE 802.11be standard. Details are not described herein.

### 2. Tunneled direct-link setup (tunneled direct-link setup, TDLS)

For two non-AP STAs associated with a same BSS, if the two non-AP STAs are in a wireless communication reachable range, a direct link may be set up between the two non-AP STAs, to transmit data between the two non-AP STAs on the direct link without forwarding by an AP. This can improve a transmission rate, and reduce a transmission delay.

It may be understood that the non-AP STA setting up the direct link may be a non-AP STA affiliated to the non-AP MLD, or may be an independent non-AP STA, that is, not affiliated to any non-AP MLD. For ease of description, a non-AP STA that is not affiliated to any non-AP MLD is referred to as a legacy STA in this application.

Usually, a direct link may be set up between two non-AP STAs associated with a same BSS according to the TDLS protocol or another P2P protocol.

In this application, P2P may also be referred to as device-to-device (device-to-device, D2D). The direct link may also be referred to as a P2P link, a D2D link, or a TDLS link. The names may be interchangeably used. This is not specifically limited in this application.

The TDLS protocol mainly includes the following operations related to the direct link:
TDLS discovery (TDLS Discovery) is completed by exchanging a TDLS discovery request (TDLS Discovery Request) frame and a TDLS discovery response (TDLS Discovery Response) frame between a TDLS initiator and a TDLS responder.

TDLS setup (TDLS Setup) is completed by exchanging a TDLS setup request (TDLS Setup Request) frame, a TDLS setup response (TDLS Setup Response) frame, and a TDLS setup confirm (TDLS Setup Confirm) frame between the TDLS initiator and the TDLS responder. Through interaction of the three frames, the TDLS initiator and the TDLS responder may complete derivation of a TDLS peer key (TDLS Peer Key, TPK).

TDLS teardown (TDLS Teardown) is completed by using a TDLS teardown (TDLS Teardown) frame.

TDLS power save (TDLS Power save) is mainly completed by using a TDLS peer power save management (power save management, PSM) request (TDLS Peer PSM Request) frame, a TDLS peer PSM response (TDLS Peer PSM Response) frame, a DLS peer traffic indication (TDLS Peer Traffic Indication) frame, and a TDLS peer traffic response (TDLS Peer Traffic Response) frame.

TDLS channel switch (TDLS channel switch) is completed by using a TDLS channel switch request (TDLS Channel Switch Request) frame and a TDLS channel switch response (TDLS Channel Switch Response) frame.

Table 1 shows a frame type of each frame, and that a transmission manner of each frame in the TDLS protocol is transmission by using an AP (Via AP) or direct transmission (Direct) on a direct link.

**Table 1**

| Frame | Via AP or direct | Frame type |
|---|---|---|
| TDLS discovery request frame | Via AP | Data frame |
| TDLS discovery response frame | Direct | Public action frame (which belongs to a management frame) |
| TDLS setup request frame | Via AP | Data frame |
| TDLS setup response frame | Via AP | Data frame |
| TDLS setup confirm frame | Via AP | Data frame |
| TDLS teardown frame | Both allowed | Data frame |
| TDLS channel switch request frame | Direct | Data frame |
| TDLS channel switch response frame | Direct | Data frame |
| TDLS peer power save management request | Direct | Data frame |
| TDLS peer power save management response | Direct | Data frame |
| TDLS peer traffic indication frame | Via AP | Data frame |
| TDLS peer traffic response frame | Direct | Data frame |

It can be learned from Table 1 that, when a TDLS-related frame is forwarded by the AP or sent on the direct link, the TDLS-related frame is encapsulated into a data frame for sending. Therefore, the foregoing TDLS-related operations are completely transparent to the AP, that is, the AP does not sense the foregoing TDLS-related operations. It should be noted that the TDLS discovery response frame is a public action frame, and is directly sent in a form of a management frame.

### 3. BSS transition

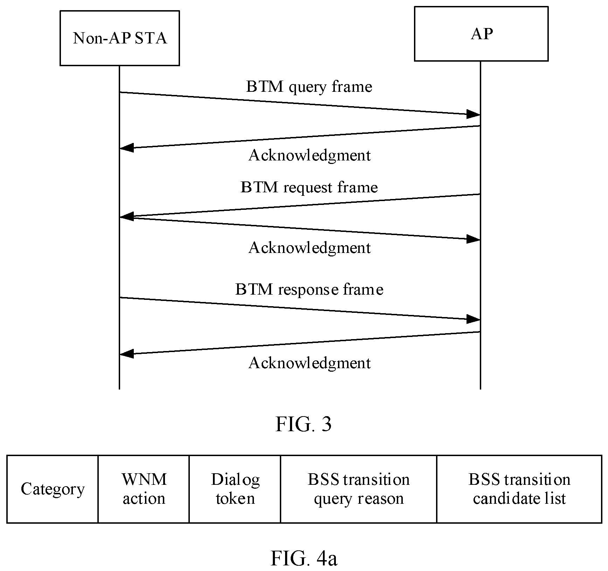

FIG. 3 shows a BSS transition management operation process. For the non-AP STA associated with the BSS, due to poor link quality or another reason, the non-AP STA may send a BSS transition management (BSS transition management, BTM) query (BTM Query) frame to the AP of the BSS. Correspondingly, the AP may reply to the non-AP STA with an acknowledgment (acknowledgment, Ack) frame for the BTM query frame.

When the AP wants the non-AP STA to perform BSS transition, the AP may send a BTM request (BTM request) frame to the non-AP STA. Correspondingly, after replying to the AP with an acknowledgment frame for the BTM request frame, the non-AP STA may send a BTM response (BTM response) frame to the AP to indicate whether to accept or reject the request of BSS transition. Correspondingly, the AP may reply with an acknowledgment frame for the BTM response frame.

FIG. 4a shows a frame structure of a BTM query frame. The BTM query frame includes a category (Category) field, a wireless network management (wireless network management, WNM) action (WNM Action) field, a dialog token (Dialog Token) field, a BSS transition query reason (BSS Transition Query Reason) field, and a BSS transition candidate list (BSS Transition Candidate List) field.

The BSS transition query reason field carries a reason why the non-AP STA sends the BTM query frame.

The BSS transition candidate list field is an optional field, and carries one or more neighbor report elements (Neighbor Report element). The neighbor report element indicates a candidate BSS determined by the non-AP STA.

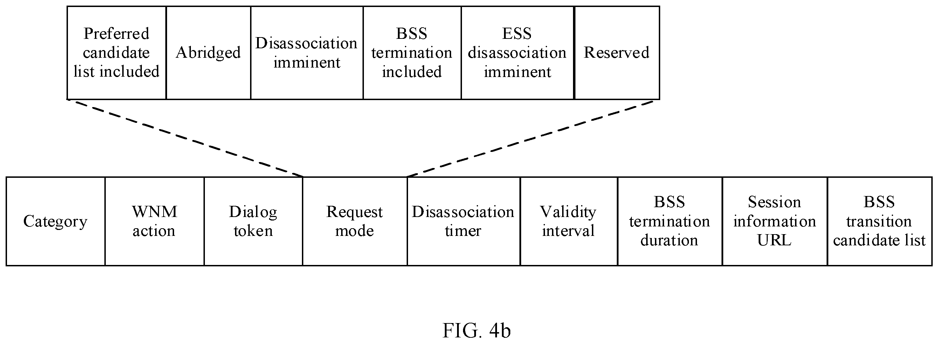

FIG. 4b shows a frame structure of a BTM request frame. The BTM request frame includes a category (Category) field, a wireless network management (wireless network management, WNM) action (WNM Action) field, a dialog token (Dialog Token) field, a request mode (Request Mode) field, a disassociation timer (Disassociation Timer) field, a validity interval (Validity Interval) field, a BSS termination duration (BSS Termination Duration) field, a session information uniform resource locator (uniform resource locator, URL) (Session Info URL) field, and a BSS transition candidate list (BSS Transition Candidate List) field.

The request mode field indicates a specific request mode, and specifically, may include the following fields:
(1) a preferred candidate list included (Preferred Candidate List Included) field, indicating whether a preferred candidate list is carried, that is, whether the BTM request frame includes a BSS transition candidate list field;
(2) an abridged (Abridged) field, where if the AP does not recommend or prohibits the non-AP STA from switching to a BSS that is not present in the BSS transition candidate list, an indication bit of the abridged field is set to 0, and if the AP sets a preference value (preference value) of a BSS that is not present in the BSS transition candidate list to 0, the indication bit of the abridged field is set to 1;
(3) a disassociation imminent (Disassociation Imminent) field, where when the field is set to 1, it indicates that the AP sends a disassociation (Disassociation) frame to disassociate from the non-AP STA, and when the field is set to 0, the AP does not send a disassociation frame to disassociate from the non-AP STA;
(4) a BSS termination included (BSS Termination Included) field, indicating whether the BSS is terminated;
(5) an extend service set (extend service set, ESS) disassociation imminent (ESS Disassociation Imminent) field, indicating whether the non-AP STA is disassociated from an entire ESS;
(6) a disassociation timer field, indicating a period of time that elapses before the AP sends a disassociation frame; and
(7) a validity interval field, indicating a quantity of beacon (Beacon) periods in which the BSS transition candidate list is valid.

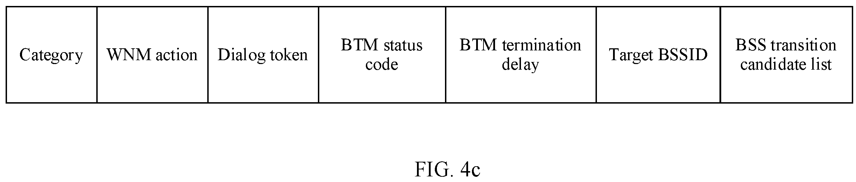

FIG. 4c shows a frame structure of a BTM response frame. The BTM response frame includes a category (Category) field, a wireless network management (wireless network management, WNM) action (WNM Action) field, a dialog token (Dialog Token) field, a BSS status code (BTM Status Code) field, a BSS termination delay (BSS Termination Delay) field, and a target BSS identifier (Target BSSID) field.

The BSS status code field indicates whether the non-AP STA accepts a BTM request.

The BSS termination delay field indicates a time for delaying BSS termination.

The target BSS identifier field indicates a target BSSID of BSS transition. For the non-AP MLD, if the non-AP MLD wants to be transferred to the AP MLD, the field is set to an MLD MAC address (Address) of the AP MLD.

The foregoing describes the frame structures of the BTM query frame, the BTM request frame, and the BTM response frame, and functions of some fields. For descriptions of other fields, refer to definitions in the related IEEE 802.11 standard. Details are not described herein.

### 4. AP coordination set

In an AP coordination scenario, a plurality of APs may form an AP coordination set. The AP coordination set includes at least one sharing AP (namely, sharing AP) and at least one shared AP (namely, shared AP).

In an AP coordination process, the sharing AP may allocate duration to the shared AP for the shared AP to perform data transmission.

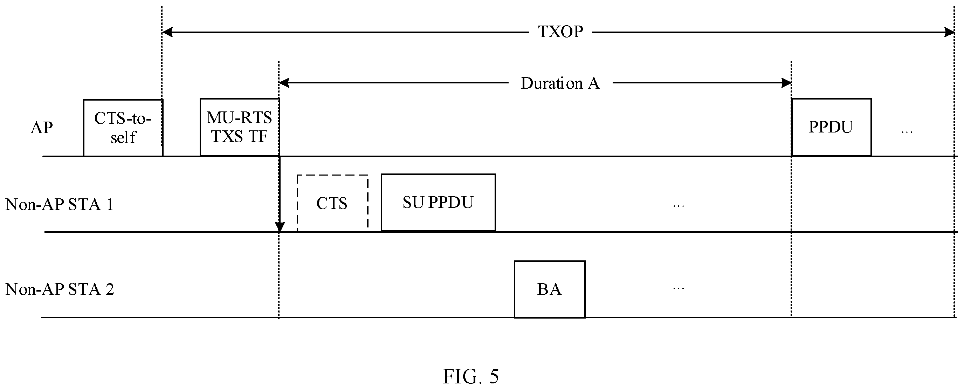

As described in the background, the AP serving as a TXOP holder may allocate a portion of duration in a TXOP to the non-AP STA for the non-AP STA to send data. For example, as shown in FIG. 5, it is assumed that the AP obtains the TXOP after sending a clear to send (clear to send, CTS) frame to the AP (CTS-to-self). Then, the AP may send a multi-user (multi-user, MU) request to send (request to send, RTS) transmission opportunity sharing (TXOP sharing, TXS) trigger frame (trigger frame, TF). The MU-RTS TXS TF may indicate duration and a non-AP STA, where it indicates that the duration is allocated to the non-AP STA; and a transmission mode, where the transmission mode indicates whether the duration is used for P2P transmission or uplink transmission of the non-AP STA.

FIG. 5 is described by using an example in which the AP allocates duration A to the non-AP STA 1 for P2P transmission of the non-AP STA 1. After receiving the MU-RTS TXS TF, the non-AP STA 1 may send a CTS frame, and then send a single user (Single user, SU) physical layer protocol data unit (physical protocol data unit, PPDU), namely, an SU PPDU, to the non-AP STA 2. The non-AP STA 2 may reply block acknowledgment (block acknowledgment, BA) of the SU PPDU. After the duration allocated by the AP to the non-AP STA ends, the AP may continue to send the PPDU in the TXOP.

Optionally, before the AP sends the MU-RTS TXS TF, the non-AP STA 1 may send, to the AP, transmission duration required by the AP.

In a scenario related to a multi-link device, the TXOP sharing mechanism may have some problems. In view of this, this application provides a buffer report sending and receiving method. The method is applicable to a scenario including a multi-link device, and is used to resolve a problem related to a TXOP sharing mechanism in the scenario.

The following describes in detail the buffer report sending and receiving method provided in this application with reference to the accompanying drawings. The method provided in this application is applicable to a Wi-Fi scenario or a WLAN scenario, for example, applicable to an IEEE 802.11 system standard, for example, the 802.11a/b/g standard, the 802.11n standard, the 802.11ac standard, the 802.11ax standard, the next generation standard (for example, the 802.11be standard), or a subsequent standard of the next generation standard. Alternatively, embodiments of this application are applicable to a wireless local area network system, for example, an Internet of things (Internet of Things, IoT) system or a vehicle-to-X (vehicle-to-X, V2X) system. It is clear that embodiments of this application are also applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, and a 5th generation (5th generation, 5G) communication system.

The communication system applicable to this application is merely an example for description, and the communication system applicable to this application is not limited thereto. This is uniformly described herein, and details are not described below again.

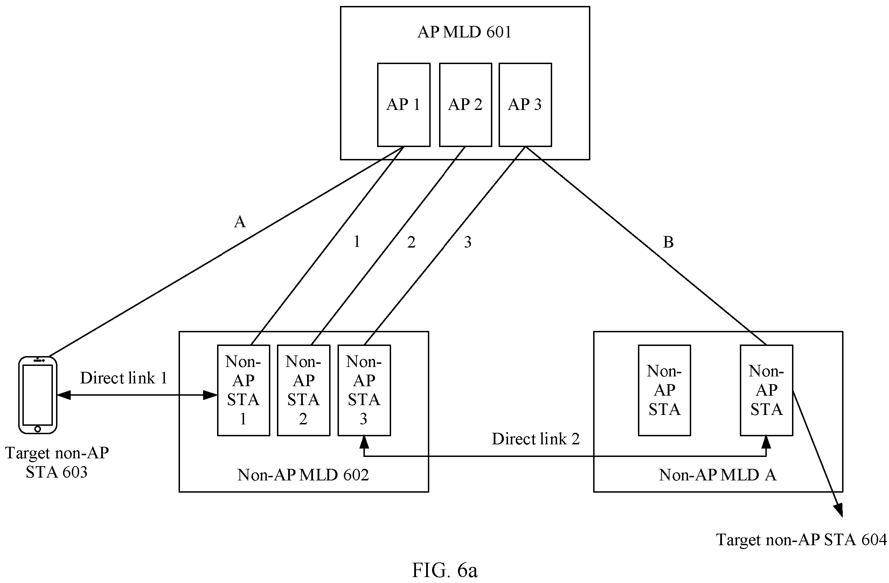

FIG. 6a shows a WLAN communication system to which an embodiment of this application is applicable according to this application. The WLAN communication system includes an AP MLD 601 and a non-AP MLD 602.

The AP MLD 601 includes a plurality of affiliated APs. FIG. 6a is described by using an example in which the plurality of affiliated APs include an AP 1, an AP 2, and an AP 3. The non-AP MLD 602 includes a plurality of affiliated non-AP STAs. FIG. 6a is described by using an example in which the plurality of affiliated non-AP STAs include a non-AP STA 1, a non-AP STA 2, and a non-AP STA 3.

A plurality of uplinks/downlinks are set up between the AP MLD 601 and the non-AP MLD 602. FIG. 6a is described by using an example in which the plurality of uplinks/downlinks include an uplink/downlink 1 between the AP 1 and the non-AP STA 1, an uplink/downlink 2 between the AP 2 and the non-AP STA 2, and an uplink/downlink 3 between the AP 3 and the non-AP STA 3.

In addition, the WLAN communication system may further include at least one target non-AP STA, and a direct link is set up between each target non-AP STA and an affiliated non-AP STA of the non-AP MLD 602. The target non-AP STA and the affiliated non-AP STA of the non-AP MLD 602 at two ends of the direct link belong to a same BSS, or are associated with a same AP of the AP MLD 601. Link identifiers of a direct link and an uplink/downlink in a same BSS are the same.

Optionally, the target non-AP STA may be a legacy STA, for example, a target non-AP STA 603 shown in FIG. 6a. A direct link 1 is set up between the target non-AP STA 603 and the affiliated non-AP STA 1 of the non-AP MLD 602, and an uplink/downlink link A is set up between the target non-AP STA 603 and the AP 1 of the AP MLD 601. The target non-AP STA 603 and the affiliated non-AP STA 1 of the non-AP MLD 602 belong to a BSS corresponding to the AP 1 of the AP MLD 601. A link identifier of the direct link 1 is the same as a link identifier of the uplink/downlink 1.

Alternatively, the target non-AP STA may be an affiliated non-AP STA of a non-AP MLD, for example, a target non-AP STA 604 shown in FIG. 6a. The target non-AP STA 604 is an affiliated non-AP STA of a non-AP MLD A. A direct link 2 is set up between the target non-AP STA 604 and the affiliated non-AP STA 3 of the non-AP MLD 602, and an uplink/downlink link B is set up between the target non-AP STA 604 and the AP 3 of the AP MLD 601. The target non-AP STA 604 and the affiliated non-AP STA 3 of the non-AP MLD 602 belong to a BSS corresponding to the AP 3 of the AP MLD 601. A link identifier of the direct link 2 is the same as a link identifier of the uplink/downlink 3.

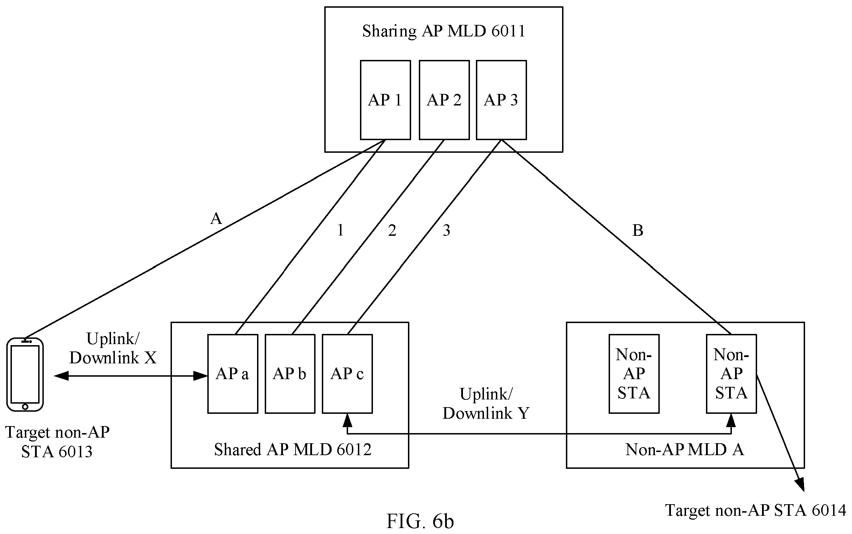

FIG. 6b shows another WLAN communication system to which an embodiment of this application is applicable according to this application. The WLAN communication system includes a sharing AP MLD (sharing AP MLD) 6011 and a shared AP MLD (shared AP MLD) 6012.

The sharing AP MLD 6011 includes a plurality of affiliated APs. FIG. 6b is described by using an example in which the plurality of affiliated APs include an AP A, an AP B, and an AP C. The shared AP MLD 6012 includes a plurality of affiliated APs. FIG. 6b is described by using an example in which the plurality of affiliated APs include an AP a, an AP b, and an AP c.

A plurality of links are set up between the sharing AP MLD 6011 and the shared AP MLD 6012. FIG.6b is described by using an example in which the plurality of links include a link 1 between the AP A and the AP a, a link 2 between the AP B and the AP b, and a link 3 between the AP C and the AP c.

In addition, the WLAN communication system may further include at least one target non-AP STA, and an uplink/downlink is set up between each target non-AP STA and an AP of the shared AP MLD 6012. The target non-AP STA and the AP of the shared AP MLD 6012 at two ends of the uplink/downlink belong to a same BSS, or are associated with a same AP of the sharing AP MLD 6011. Link identifiers of an uplink/downlink and a link between a sharing AP and a shared AP in a same BSS are the same.

Optionally, the target non-AP STA may be a legacy STA, for example, a target non-AP STA 6013 shown in FIG. 6b. An uplink/downlink X is set up between the target non-AP STA 6013 and the AP a of the shared AP MLD 6012, and an uplink/downlink A is set up between the target non-AP STA 6013 and the AP A of the sharing AP MLD 6011. The target non-AP STA 6013 and the AP a of the shared AP MLD 6012 belong to a BSS corresponding to the AP A of the sharing AP MLD 6011. A link identifier of the uplink/downlink X is the same as a link identifier of the link 1.

Alternatively, the target non-AP STA may be an affiliated non-AP STA of a non-AP MLD, for example, a target non-AP STA 6014 shown in FIG. 6a. The target non-AP STA 6014 is an affiliated non-AP STA of a non-AP MLD A. An uplink/downlink Y is set up between the target non-AP STA 6014 and the AP c of the shared AP MLD 6012, and an uplink/downlink B is set up between the target non-AP STA 6014 and the AP C of the sharing AP MLD 6011. The target non-AP STA 6014 and the AP c of the shared AP MLD 6012 belong to a BSS corresponding to the AP C of the sharing AP MLD 6011. A link identifier of the uplink/downlink Y is the same as a link identifier of the link 3.

The non-AP MLD in this application may be a wireless communication chip, a wireless sensor, or a wireless communication terminal, for example, a user terminal, a user apparatus, an access apparatus, a subscriber station, a subscriber unit, a mobile station, a user agent, and user equipment supporting a Wi-Fi communication function. The user terminal may include various devices having a wireless communication function, for example, a handheld device, a vehicle-mounted device, a wearable device, an Internet of things (Internet of things, IoT) device, a computing device, another processing device connected to a wireless modem, user equipment (user equipment, UE) in various forms, a mobile station (mobile station, MS), a terminal (terminal), a terminal device (terminal equipment), a portable communication device, a handheld device, a portable computing device, an entertainment device, a game device or system, a global positioning system device, or any other suitable device configured to perform network communication by using a wireless medium. In addition, the non-AP MLD may support the 802.11be standard or a next-generation WLAN standard of the 802.11be standard. The non-AP MLD may also support a plurality of WLAN standards such as 802.11ax, 802.11ac, 802.11n, 802.11g, 802.11b, and 802.11a.

The AP MLD in embodiments of this application may an apparatus that provides a wireless communication function for the non-AP STA associated with the AP MLD and that is deployed in a wireless communication network, and is mainly deployed in a home, a building, and a park. A typical coverage radius is tens of meters to 100-odd meters. It is clear that the AP may alternatively be deployed outdoors. The AP MLD is equivalent to a bridge that connects the wired network and the wireless network. A main function of the AP MLD is to connect various wireless network clients together and then connect the wireless network to the Ethernet. Specifically, the AP MLD may be a communication device with a Wi-Fi chip, for example, a base station, a router, a gateway, a repeater, a communication server, a switch, or a bridge. The base station may include a macro base station, a micro base station, a relay station, and the like in various forms. In addition, the AP MLD may support the 802.11be standard or a next-generation WLAN standard of the 802.11be standard. The AP MLD may also support WLAN standards such as 802.11ax, 802.11ac, 802.11n, 802.11g, 802.11b, and 802.11a.

In the system shown in FIG. 6a, direct link setup is transparent to the AP MLD. In other words, the AP MLD cannot learn of an affiliated AP corresponding to a BSS in which a direct link is set up. Therefore, the AP MLD may not learn of a direct link to which transmission duration in a TXOP is allocated, and further, a transmission delay on the direct link may increase.

In view of this, this application provides a buffer report sending and receiving method. Therefore, an AP, corresponding to a direct link, of an AP MLD may determine to allocate duration, to an affiliated non-AP STA of a non-AP MLD, that is of transmission on the direct link and that is in a TXOP obtained by the AP, to send data on the direct link in time, and reduce a transmission delay on the direct link.

The following describes in detail the buffer report sending and receiving method provided in embodiments of this application with reference to the accompanying drawings and by using interaction between the AP MLD 601 and the non-AP STA 602 shown in FIG. 6a as an example.

It may be understood that an execution body may perform a part or all of the steps in embodiments of this application. The steps or operations are merely examples. Embodiments of this application may further include performing other operations or variations of various operations. In addition, the steps may be performed in a sequence different from a sequence presented in embodiments of this application, and not all operations in embodiments of this application need to be performed.

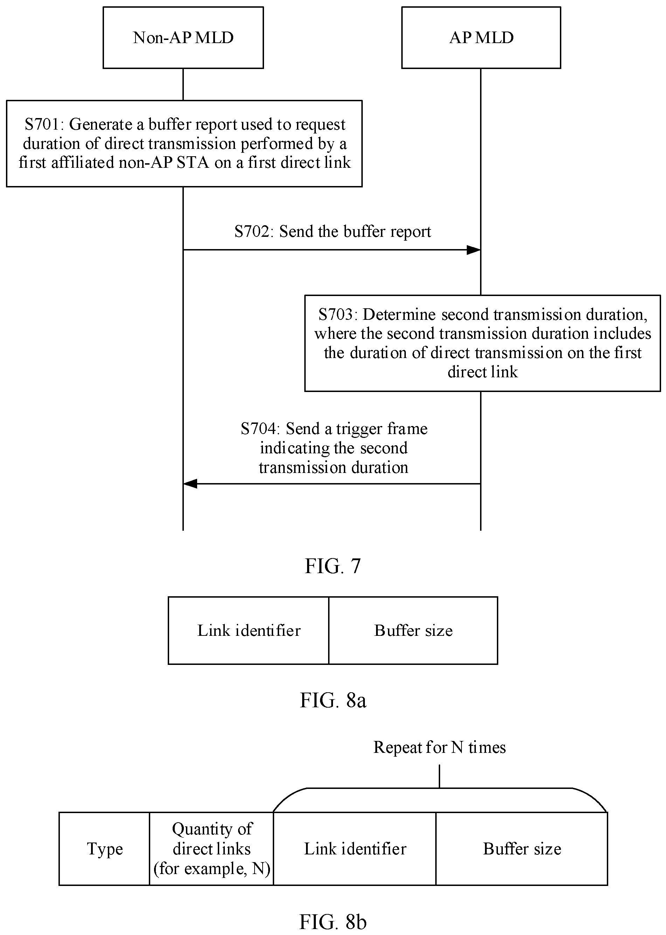

FIG. 7 is a schematic flowchart of a buffer report sending and receiving method according to an embodiment of this application. The method includes the following steps.

S701: A non-AP MLD generates a buffer report (buffer report).

The buffer report is used to request duration of direct transmission performed by a first affiliated non-AP STA of the non-AP MLD on a first direct link. The first direct link is a link between a first target non-AP STA and the first affiliated non-AP STA of the non-AP MLD. The first target non-AP STA and the first affiliated non-AP STA of the non-AP MLD belong to a same BSS.

It may be understood that a plurality of direct links may be set up between a plurality of affiliated non-AP STAs of the non-AP MLD and a plurality of target non-AP STAs. This application is described by using an example in which the first direct link is set up between the first affiliated non-AP STA of the non-AP MLD and the first target non-AP STA. For a feature and related implementation of a direct link set up between another affiliated non-AP STA of the non-AP MLD and another target non-AP STA, refer to the first direct link and descriptions related to the first direct link in this application.

For example, as shown in FIG. 6a, the first affiliated non-AP STA of the non-AP MLD may be the non-AP STA 3 of the non-AP MLD 602. Correspondingly, the first target non-AP STA is the target non-AP STA 604, and the first direct link is the direct link 2.

Alternatively, the first affiliated non-AP STA of the non-AP MLD may be the non-AP STA 1 of the non-AP MLD 602. Correspondingly, the first target non-AP STA is the target non-AP STA 603, and the first direct link is the direct link 1.

For information included in the buffer report, the following two cases may exist:

Case 1: The buffer report includes link information and transmission duration information.

The transmission duration information indicates first transmission duration, and the first transmission duration is the duration of direct transmission performed by the first affiliated non-AP STA of the non-AP MLD on the first direct link.

Optionally, the first transmission duration may be a normalized time length. The normalized time length may be duration determined based on a reference bandwidth (for example, 80 MHz), a reference rate, and the like.

In a possible implementation, the transmission duration information may include a size of a first buffer. The first buffer is used to cache data to be sent on the first direct link by the first affiliated non-AP STA of the non-AP MLD, or cache data to be sent by the first affiliated non-AP STA of the non-AP MLD to the first target non-AP STA.

It may be understood that when a plurality of direct links are set up between the first affiliated non-AP STA of the non-AP MLD and the plurality of target non-AP STAs, the buffer report may not indicate a target non-AP STA at the other end of the direct link other than the first affiliated non-AP STA. In other words, the buffer report does not indicate a target non-AP STA, but indicates the direct link based on the link information.

For example, when the transmission duration information includes the size of the first buffer, the first transmission duration may be determined based on the size of the first buffer. For example, the first transmission duration may be calculated based on the size of the first buffer, the reference bandwidth, the reference rate, and the like.

In another possible implementation, the transmission duration information may include the first transmission duration. For example, the first transmission duration may be determined based on a size of a first buffer, the reference bandwidth, the reference rate, and the like.

In other words, when the transmission duration information includes the size of the first buffer, the transmission duration information implicitly indicates the first transmission duration. When the transmission duration information includes the first transmission duration, the transmission duration information explicitly indicates the first transmission duration.

The link information indicates the first direct link.

In a possible implementation, the link information may be an identifier of the first direct link. If the first direct link is the direct link 1 shown in FIG. 6a, the identifier of the first direct link is the identifier of the direct link 1. Because the identifier of the direct link 1 is the same as the identifier of the uplink/downlink 1, the identifier of the direct link 1 is also the identifier of the uplink/downlink 1.

In a specific example, when link identifier information includes the identifier of the first direct link, for example, the transmission duration information includes the size of the first buffer, a structure of the buffer report may be shown in FIG. 8a. A link identifier (link ID) field is used to carry an identifier of a direct link, and a buffer size field is used to carry a buffer size.

Optionally, when the link identifier information includes the identifier of the first direct link, the buffer report may further include type (Type) information and/or information about a quantity of direct links (Numbers of direct link). The type information indicates that one or more uplinks/downlinks are set up between the non-AP MLD and the AP MLD. The information about a quantity of direct links indicates a quantity N of direct links on which data is to be transmitted. For example, in the system shown in FIG. 6a, there are two direct links. If data is to be transmitted on the direct link 1, and no data is to be transmitted on the direct link 2, the quantity of direct links is 1. If data is to be transmitted on both the direct link 1 and the direct link 2, the quantity of direct links is 2.

For example, the buffer report further includes the type (Type) information and/or the information about a quantity of direct links (Numbers of direct link) link, and a structure of the buffer report may be shown in FIG. 8b. The type field is used to carry the type information. For example, when the type field is set to 1, it may indicate that a plurality of uplinks/downlinks are set up between the non-AP MLD and the AP MLD. When the type field is set to 0, it may indicate that one uplink/downlink is set up between the non-AP MLD and the AP MLD. A field of a quantity of direct links is used to carry the information about a quantity of direct links.

For example, when N is greater than 1, that is, when data is to be transmitted on the plurality of direct links, the link identifier field and the buffer size field may be repeated for N times. The N link identifier fields separately carry N pieces of link identifier information, and the N buffer size fields separately carry sizes of N buffers.

In another possible implementation, the link information may be a bitmap. A size of the bitmap is a total quantity of uplinks/downlinks set up between the non-AP MLD and the AP MLD. For example, in the system shown in FIG. 6a, a size of the bitmap is 3.

Optionally, each bit in the bitmap corresponds to one uplink/downlink set up between the non-AP MLD and the AP MLD. When data is to be transmitted on a direct link whose identifier is the same as an identifier of an uplink/downlink, a bit corresponding to the direct link may be set to 1, to indicate that the direct link is a direct link whose identifier is the same as the identifier of the uplink/downlink corresponding to the bit.

For example, in the system shown in FIG. 6a, when the first direct link is the direct link 1, the identifier of the direct link 1 is the same as the identifier of the uplink/downlink 1. It is assumed that bits in the bitmap sequentially correspond to the uplink/downlink 1, the uplink/downlink 2, and the uplink/downlink 3 from left to right, and the bitmap may be set to 100. A first bit is set to 1, and it indicates that the direct link is the direct link 1 whose identifier is the same as the identifier of the uplink/downlink 1 corresponding to the bit.

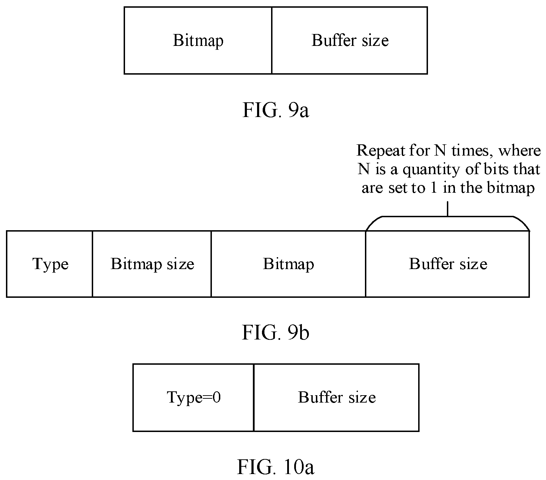

In a specific example, when the link identifier information includes the bitmap, for example, the transmission duration information includes the size of the first buffer, a structure of the buffer report may be shown in FIG. 9a. A bitmap field is used to carry the bitmap, a size of the field is the same as the size of the bitmap, and the buffer size field is used to carry the buffer size.

Optionally, when the link identifier information includes the bitmap, the buffer report may further include type (Type) information and/or a bitmap size. For a function of the type information, refer to the foregoing related descriptions. The bitmap size indicates the size of the bitmap.

For example, the buffer report further includes the type (Type) information and/or the bitmap size, and a structure of the buffer report may be shown in FIG. 9b. For a function of a type field, refer to the foregoing related descriptions. A bitmap size field is used to carry the bitmap size.

For example, when data is to be transmitted on the plurality of direct links, the buffer size field may be repeated for N times, and the N buffer size fields separately carry sizes of N buffers. In addition, the bitmap carried in the bitmap field indicates the plurality of direct links. For example, in a scenario shown in FIG. 6a, if data is to be transmitted on both the direct link 1 and the direct link 2, the bitmap may be set to 101.

In the foregoing structures in FIG. 8a to FIG. 9b, an example in which the transmission duration information includes the buffer size is used for description. When the transmission duration information includes the first transmission duration, the buffer size field in FIG. 8a to FIG. 9b may be replaced with a transmission duration field used to carry the transmission duration.

Case 2: The buffer report includes transmission duration information and does not include link information.

For the transmission duration information and the link information, refer to related descriptions in Case 1. Details are not described herein again.

S702: The non-AP MLD sends the buffer report to the AP MLD on a first uplink/downlink of the plurality of uplinks/downlinks. Correspondingly, the AP MLD receives the buffer report from the non-AP MLD on the first uplink/downlink.

In a possible implementation, the buffer report is as described in Case 1, and the first uplink/downlink is any one of the plurality of uplinks/downlinks set up between the non-AP MLD and the AP MLD.

It should be noted that, unless otherwise specified, the uplink/downlink in this application is an enabled (enabled) uplink/downlink.

For example, in the scenario shown in FIG. 6a, if the uplink/downlink 1, the uplink/downlink 2, and the uplink/downlink 3 are all enabled uplinks/downlinks, the first uplink/downlink may be any one of the uplink/downlink 1, the uplink/downlink 2, or the uplink/downlink 3.

In another possible implementation, the buffer report is as described in Case 2, and the first uplink/downlink is an uplink/downlink that is of the plurality of uplinks/downlinks set up between the non-AP MLD and the AP MLD and whose identifier is the same as the identifier of the first direct link. In other words, the identifier of the first uplink/downlink is the same as the identifier of the first direct link.

For example, in the scenario shown in FIG. 6a, if the first direct link is the direct link 1, the first uplink/downlink is the uplink/downlink 1.

It may be understood that, when the buffer report is as described in Case 2, if data is to be transmitted on the plurality of direct links, the buffer report needs to be separately sent on an uplink/downlink corresponding to each direct link. For example, in the scenario shown in FIG. 6a, if data is to be sent on both the direct link 1 and the direct link 2, the non-AP MLD sends, to the AP MLD on the uplink/downlink 1, a buffer report corresponding to the direct link 1, to indicate duration of direct transmission on the direct link 1; and sends, to the AP MLD on the uplink/downlink 3, a buffer report corresponding to the direct link 3, to indicate duration of direct transmission on the direct link 3.

Optionally, content and a sending manner of the buffer report are as follows: The non-AP MLD may first determine the content of the buffer report, and then determine, based on the content of the buffer report, an uplink/downlink used to send the buffer report to the AP MLD. Alternatively, the non-AP MLD may first determine an uplink/downlink used to send the buffer report to the AP MLD, and then determine the content of the buffer report based on the determined uplink/downlink. This is not specifically limited in this application.

A manner of carrying the buffer report is as follows:
In a possible implementation, the buffer report may be carried in a management frame. In other words, that the non-AP MLD sends the buffer report to the AP MLD on a first uplink/downlink of the plurality of uplinks/downlinks may include: The non-AP MLD sends the management frame to the AP MLD on the first uplink/downlink of the plurality of uplinks/downlinks. The management frame includes the buffer report.

In a specific example, the buffer report may be carried in an aggregated control (aggregated control, A-control) field in a frame header of the management frame. In other words, the management frame includes the A-control field, and the A-control field includes the buffer report.

Optionally, the A-control field carrying the buffer report may be a newly defined type of A-control, and the type of A-control may carry a buffer report corresponding to direct transmission. In other words, the buffer report carried in the type of A-control includes the buffer report corresponding to direct transmission. It may be understood that the buffer report corresponding to direct transmission is used to request duration of direct transmission on a direct link.

In another specific example, the buffer report may be carried in a frame body of the management frame.

Optionally, the management frame may be a newly defined type of management frame, and the type of management frame may carry a buffer report corresponding to direct transmission. In other words, the buffer report carried in the type of management frame includes the buffer report corresponding to direct transmission.

Optionally, when the buffer report is carried in the management frame, a frame header of the management frame may further include multi-link device information, and the multi-link device information indicates the non-AP MLD.

In another possible implementation, the buffer report may be carried in an aggregated control A-control field of a frame header of a data frame. In other words, that the non-AP MLD sends the buffer report to the AP MLD on a first uplink/downlink of the plurality of uplinks/downlinks may include: The non-AP MLD sends the data frame to the AP MLD on the first uplink/downlink of the plurality of uplinks/downlinks. The data frame includes the A-control field, and the A-control field includes the buffer report.

Optionally, the A-control field carrying the buffer report may be a newly defined type of A-control, and the type of A-control may carry a buffer report corresponding to direct transmission. For details, refer to the foregoing related descriptions. Details are not described herein again.

In still another possible implementation, the buffer report may be carried in a quality of service (quality of service, QoS) control (control) (namely, QoS control) field of the data frame. For example, the data frame may be a QoS null frame. In other words, the buffer report may be carried in a QoS control field of the QoS null frame.

Optionally, when the buffer report is carried in the data frame, a frame header of the data frame may further include multi-link device information, and the multi-link device information indicates the non-AP MLD.

S703: The AP MLD determines second transmission duration.

The AP MLD may obtain TXOPs in a plurality of BSSs before step S703. The plurality of BSSs are BSSs separately corresponding to a plurality of affiliated APs of the AP MLD. After receiving the buffer report, the AP MLD may learn of that the first affiliated non-AP STA of the non-AP MLD performs direct transmission on the first direct link, so that an affiliated AP, corresponding to the first direct link, of the AP MLD may determine to allocate duration, to the first affiliated non-AP STA, that is of transmission on the first direct link and that is in a TXOP obtained by the affiliated AP.

In other words, the second transmission duration includes the duration, of direct transmission on the first direct link, that is allocated by the AP MLD to the first affiliated non-AP STA of the non-AP MLD. The second transmission duration is duration in a TXOP obtained by the affiliated AP, of the AP MLD, corresponding to the first direct link.

For example, in the scenario shown in FIG. 6a, when the first direct link is the direct link 1, an affiliated AP, of the AP MLD, corresponding to the first direct link is the AP 1.

Optionally, the second transmission duration may be the same as or different from the first transmission duration. In other words, the duration allocated by the AP MLD is not necessarily equal to the duration requested by the non-AP MLD.

S704: The AP MLD sends first duration indication information, and correspondingly, the non-AP MLD receives the first duration indication information from the AP MLD.

The first duration indication information indicates the second transmission duration. For example, the first duration indication information may be carried in a trigger frame.

Optionally, the trigger frame that carries the first duration indication information may be an MU-RTS TXS TF. In this case, the trigger frame may include information about the non-AP MLD, to indicate that the second transmission duration is allocated to the first affiliated non-AP STA of the non-AP MLD.

Optionally, the trigger frame may further include first mode information. The first mode information may indicate that the second transmission duration is used by the first affiliated non-AP STA of the non-AP MLD to perform direct transmission and uplink transmission.

Optionally, when the first mode information indicates that the second transmission duration is used by the first affiliated non-AP STA of the non-AP MLD to perform direct transmission and uplink transmission, after receiving the trigger frame, the non-AP MLD may perform direct transmission and uplink transmission on the first direct link in the second transmission duration.

Based on this solution, the non-AP MLD sends the buffer report to the AP MLD. The buffer report can be used to request the duration of direct transmission performed by the first affiliated non-AP STA of the non-AP MLD on the first direct link. Therefore, after receiving the buffer report, the AP MLD may learn of that the first affiliated non-AP STA of the non-AP MLD performs direct transmission on the first direct link, so that an affiliated non-AP STA, corresponding to the first direct link, of the AP MLD may determine to allocate duration, to the first affiliated non-AP STA, that is of transmission on the first direct link and that is in a TXOP obtained by the affiliated non-AP STA. In this way, data can be sent on the direct link in time, and a transmission delay on the direct link can be reduced.

The foregoing embodiment is described by using an example in which the plurality of uplinks/downlinks are set up between the non-AP MLD and the AP MLD. A proper variation may be made, so that the embodiment is applicable to a scenario in which only one uplink/downlink is set up between the non-AP MLD and the AP MLD, or a scenario in which one uplink/downlink is set up between a legacy STA and the AP MLD. For example, in the two scenarios, the buffer report may not carry the link information, and a structure of the buffer report may be shown in FIG. 10a. A type field is set to 0, and indicates that one uplink/downlink is set up between the non-AP MLD (or the legacy STA) and the AP MLD.

The foregoing embodiment is described by using an example in which the non-AP MLD requests the duration of direct transmission on the direct link. In addition, the non-AP MLD may further request duration of uplink transmission. In this case, the non-AP MLD may generate a direct buffer report used to request the duration of direct transmission, and an uplink buffer report used to request the duration of uplink transmission or report an uplink buffer size.

It may be understood that, in a case in which the non-AP MLD reports both the direct buffer report and the uplink buffer report, the buffer report in the procedure shown in FIG. 7 may be considered as the direct buffer report.

In a possible implementation, related implementation of the uplink buffer report is similar to that of the direct buffer report. For the uplink buffer report, refer to the foregoing descriptions. Details are not described herein again.

In another possible implementation, the uplink buffer report may include traffic identifier (traffic identifier, TID) information and transmission duration information, and is used to request transmission duration corresponding to a TID. Because a mapping relationship (TID-to-link mapping) exists between a TID and a link, the AP MLD can determine, based on the buffer report, to allocate duration, for uplink transmission, in the TXOP obtained by the affiliated AP corresponding to the link corresponding to the TID.

In still another possible implementation, the uplink buffer report may include TID information and queue size (Queue Size) information, and the queue size information indicates a queue size of a TID indicated by the TID information. Optionally, duration for uplink transmission that is requested by the uplink buffer report may be determined based on the queue size of the TID.

Optionally, in the uplink buffer report, the traffic identifier information may include a TID or a bitmap, and the transmission duration information may include a buffer size or transmission duration. For details, refer to related descriptions of the link information and the transmission duration of the direct buffer report. Details are not described herein again.

In a possible implementation, to distinguish between the direct buffer report and the uplink buffer report, when the direct buffer report and the uplink buffer report are carried in a same type of A-control or a same type of management frame, based on the feature of the procedure shown in FIG. 7, the buffer report may further include buffer type information. The buffer type information indicates whether a buffer report in which the buffer type information is located is a buffer report corresponding to direct transmission or an uplink buffer report.

In another possible implementation, different types of management frames or different types of A-control may be used to respectively carry the direct buffer report and the uplink buffer report.

In still another possible implementation, when the direct buffer report or the uplink buffer report is carried in a QoS control field in a QoS null frame, based on the feature of the procedure shown in FIG. 7, the buffer report may further include a resource request type (Resource Request Type). The resource request type indicates whether the buffer report is used for an uplink resource request or a direct resource request.

Optionally, the resource request type may also be referred to as a buffer type. Correspondingly, that resource request type indicates whether the buffer report is used for an uplink resource request or a direct resource request may be understood as follows: The buffer type indicates whether the buffer report is an uplink buffer report or a direct buffer report.

Optionally, in this possible implementation, the direct buffer report may further include channel width information, and the channel width information indicates a reference bandwidth. For the reference bandwidth, refer to the related descriptions in step S701. Details are not described herein again.

In a possible implementation, when the buffer report includes the resource request type, a bit 7 in the QoS control field of the QoS null frame may be used to carry the resource request type. When the bit 7 in the QoS control field is set to a third value, it may indicate that the buffer report is used for the uplink resource request. When the bit 7 in the QoS control field is set to a fourth value, it may indicate that the buffer report is used for the direct resource request.

For example, the third value may be 0. Correspondingly, the fourth value may be 1. Alternatively, the third value may be 1. Correspondingly, the fourth value may be 0. For example, the third value is 1, and the fourth value is 1. A function or setting of each bit in the QoS control field of the QoS null frame may be shown in Table 2.

**Table 2**

| Subtype of an available frame | Bits 0-3 | Bit 4 | Bits 5-6 | Bit 7 | Bits 8 | Bit 9 | Bit 10 | Bits 11-15 |
|---|---|---|---|---|---|---|---|---|
| QoS null frame sent by a non-AP STA | TID | 0 | Acknowledgment policy indicator | Resource request type (=0) | TXOP duration requested | | | |
| QoS null frame sent by a non-AP STA | TID | 1 | Acknowledgment policy indicator | Resource request type (=0) | Queue size | | | |
| QoS null frame sent by a non-AP STA | Channel width | 0 | Acknowledgment policy indicator | Resource request type (=1) | TXOP duration requested | | | |

The TID field is used to carry the TID information and indicates the TID corresponding to the buffer report.

The acknowledgment policy indicator (Ack Policy Indicator) field indicates a used acknowledgment policy. For details, refer to a related definition in the 802.11be standard. Details are not described herein again.

The resource request type (Resource Request Type) field indicates a resource request type.

The TXOP duration requested (TXOP Duration Requested) field is used to carry transmission duration information of the buffer report, and indicates requested transmission duration. For example, when the TXOP duration requested field is set to 0, it indicates that the transmission duration is not requested, or the transmission duration is 0. When the TXOP duration requested field is set to a non-zero value, the requested transmission duration may be a value of the field multiplied by 32 microseconds. Therefore, the transmission duration corresponding to the field may range from 32 microseconds to 8160 microseconds.

The queue size (Queue Size) field is used to carry queue size information, and indicate a queue size of a TID.

The channel width (Channel Width) field is used to carry channel width information and indicates a reference bandwidth. For example, a correspondence between a value of the channel width field and the reference bandwidth may be shown in Table 3.

**Table 3**

| Value of a channel width field | Reference bandwidth |
|---|---|
| 0 | 20 MHz |
| 1 | 40 MHz |
| 2 | 80 MHz |
| 3 | 160 MHz |
| 4 | 320 MHz |
| 5-15 | Reserved (reserved) |

When the resource request type is set to 0, it indicates that the buffer report is an uplink buffer report. When the resource request type field is set to 1, it indicates that the buffer report is a direct buffer report. Therefore, setting shown in Table 2 may indicate that the uplink buffer report includes TID information, a resource request type, and transmission duration information. Alternatively, the uplink buffer report includes TID information, resource request type information, and queue size information. The direct buffer report may include channel width information, a resource request type, and transmission duration information.

Optionally, the QoS null frame sent by the non-AP STA in Table 2 may be understood as a QoS null frame sent to the AP when the non-AP STA supports TXS. In addition, the non-AP STA may be a non-AP EHT STA or a non-AP STA that supports a future evolved WLAN standard.

In another possible implementation, a bit 3 in the QoS control field of the QoS null frame may be used to carry the resource request type. When the bit 3 in the QoS control field is set to a third value, it may indicate that the buffer report is used for the uplink resource request. When the bit 3 in the QoS control field is set to a fourth value, it may indicate that the buffer report is used for the direct resource request.

For example, the third value is 1, and the fourth value is 1. A function or setting of each bit in the QoS control field of the QoS null frame may be shown in Table 4.

**Table 4**

| Subtype of an available frame | Bits 0-2 | Bit3 | Bit 4 | Bits 5-6 | Bit 7 | Bit 8 | Bit 9 | Bit 10 | Bits 11-15 |
|---|---|---|---|---|---|---|---|---|---|
| QoS null frame sent by a non-AP STA | TID | Resource request type (=0) | 0 | Acknowledgment policy indicator | Reserved | TXOP duration requested | | | |
| QoS null frame sent by a non-AP STA | TID | Resource request type (=0) | 1 | Acknowledgment policy indicator | Reserved | Queue size | | | |
| QoS null frame sent by a non-AP STA | Channel width | Resource request type (=1) | 0 | Acknowledgment policy indicator | Reserved | TXOP duration requested | | | |

For Table 4, refer to the related descriptions in Table 2. Details are not described herein again. It should be noted that Table 2 and Table 4 are merely examples in which the uplink buffer report includes the TID information, the resource request type, and the transmission duration information. In this application, the uplink buffer report is not limited to that shown in Table 2 or Table 4. For example, the TID field in Table 2 and Table 4 may alternatively be replaced with a link information field used to carry link information. Similarly, the direct buffer report is not limited to that shown in Table 2 or Table 4. For example, the channel width field in Table 2 and Table 4 may alternatively be replaced with a link information field used to carry link information.

Optionally, after the AP MLD receives the uplink buffer report, when TID-to-link mapping is negotiated by the AP MLD and the non-AP MLD, the affiliated AP corresponding to the link corresponding to the TID may perform TXS in the obtained TXOP, and allocate duration for uplink transmission. When TID-to-link mapping is set by default, any affiliated AP, of the AP MLD, that sets up a link with the non-AP MLD may perform TXS in the TXOP obtained by the affiliated AP, and allocate the duration for uplink transmission.

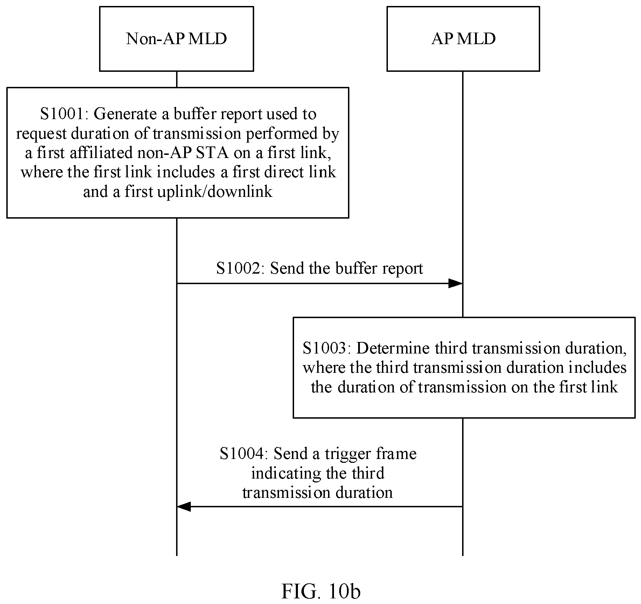

The foregoing embodiment provides a solution in which the direct buffer report is independent of the uplink buffer report. In addition, this application further provides a buffer report sending and receiving method. In the method, a buffer report may be used to request transmission duration of a direct link and transmission duration of an uplink. As shown in FIG. 10b, the buffer report sending and receiving method includes the following steps.

S1001: A non-AP MLD generates a buffer report.

The buffer report is used to request duration of transmission performed by a first affiliated non-AP STA of the non-AP MLD on a first link. The first link includes a first direct link and a first uplink/downlink.

The first direct link is a link between a first target non-AP STA and the first affiliated non-AP STA of the non-AP MLD. The first uplink/downlink is a link between a first affiliated AP of an AP MLD and the first affiliated non-AP STA of the non-AP MLD. The first target non-AP STA, the first affiliated non-AP STA of the non-AP MLD, and the first affiliated AP of the AP MLD belong to a same BSS.

For example, in the scenario shown in FIG. 6a, the first direct link may be the direct link 1, the first uplink/downlink may be the uplink/downlink 1.

For information included in the buffer report, the following two implementations may exist:
In a possible implementation, the buffer report may include link information, transmission duration information, and second mode information. The second mode information indicates whether the transmission duration information indicates uplink transmission duration or total duration of uplink transmission and direct transmission. For the link information and the transmission duration information, refer to the related descriptions in step S701. Details are not described herein again.

Optionally, the second mode information may be 1-bit indication information. When a bit is set to 0, it indicates that the transmission information indicates the uplink transmission duration. When the bit is set to 1, it indicates that the transmission information indicates the total duration of uplink transmission and direct transmission.

For example, in the scenario shown in FIG. 6a, if the affiliated non-AP STA 1 of the non-AP MLD is to transmit data on the direct link 1, and is to transmit uplink data on the uplink/downlink 1, the second mode information of the buffer report may be set to 1. The transmission duration information is a sum of sizes of the uplink buffer and the direct buffer, or a sum of the uplink transmission duration and the direct transmission duration. If the affiliated non-AP STA 3 of the non-AP MLD is not to transmit direct data on the direct link 2, and is to transmit uplink data on the uplink/downlink 3, the second mode information of the buffer report may be set to 0. The transmission duration information is the size of the uplink buffer or the uplink transmission duration.

It may be understood that the uplink buffer is used to cache to-be-transmitted uplink data, and the direct buffer is used to cache data to be transmitted on the direct link.

In another possible implementation, the buffer report may include transmission duration information and second mode information. For details, refer to the related descriptions of Case 2 in step S701. Details are not described herein again.

S1002: The non-AP MLD sends the buffer report to the AP MLD on a second uplink/downlink of a plurality of uplinks/downlinks.

Optionally, the second uplink/downlink may be any one of the plurality of uplinks/downlinks, or the second uplink/downlink is the same as the first uplink/downlink in step S1001. For details, refer to the related descriptions in step S702. Details are not described herein again.

S1003: The AP MLD determines third transmission duration.

The third transmission duration includes the duration, of transmission on the first link, that is allocated by the AP MLD to the first affiliated non-AP STA of the non-AP MLD, namely, including duration of direct transmission on the first direct link and duration of uplink transmission on the first uplink/downlink. Duration for direct transmission in the third transmission duration may be duration in a TXOP obtained by an affiliated AP, of the AP MLD, corresponding to the first link. When an uplink buffer report includes a TID, if TID-to-link mapping is negotiated by the AP MLD and the non-AP MLD, the duration for uplink transmission in the third transmission duration may be duration in a TXOP obtained by an affiliated AP corresponding to the first uplink/downlink. When TID-to-link mapping is set by default, the duration for uplink transmission in the third transmission duration may be duration in a TXOP obtained by any affiliated AP, of the AP MLD, that sets up a link with the non-AP MLD.

S1004: The AP MLD sends second duration indication information, and correspondingly, the non-AP MLD receives the second duration indication information from the AP MLD.

The second duration indication information indicates the third transmission duration. For the second duration indication information, refer to the related descriptions in step S704. Details are not described herein again.

Based on this solution, the non-AP MLD sends the buffer report to the AP MLD. The buffer report can be used to request total duration of transmission performed by the first affiliated non-AP STA of the non-AP MLD on the first direct link and the first uplink/downlink. Therefore, after receiving the buffer report, the AP MLD may learn of that the first affiliated non-AP STA of the non-AP MLD is to perform transmission on the first direct link and the first uplink/downlink, so that an affiliated AP, corresponding to the first direct link and the first uplink/downlink, of the AP MLD may determine to allocate duration, to the first affiliated non-AP STA, that is of transmission on the first direct link and the first uplink/downlink and that is in a TXOP obtained by the affiliated AP. In this way, data can be sent in time, and a transmission delay can be reduced.

In addition, the method provided in the foregoing embodiment of this application may further be properly modified to be applicable to a scenario of an AP coordination set. For example, a sharing AP MLD in the AP coordination set may implement a function of the AP MLD in the method, and a shared AP MLD may implement a function of the non-AP MLD in the method. A difference lies in that a buffer report generated and sent by the shared AP MLD is used to request duration of transmission performed by a first affiliated AP of the shared AP MLD on a first uplink/downlink. The first uplink/downlink is a link, for example, the uplink/downlink X shown in FIG. 6b, between the first affiliated AP of the shared AP MLD and a target non-AP STA.

Optionally, in addition to the solution in a TXOP sharing mechanism, this application further provides some related solutions in a BSS transition scenario.

It can be learned from brief introduction of the related technology that a source AP MLD may send a BTM request frame to a non-AP MLD, to request to transfer the non-AP MLD to a target AP MLD. Some fields of the BTM request frame are related to a link. For example, a disassociation timer field and a validity interval field use a target beacon transmission time (target beacon transmission time, TBTT) of an uplink/downlink as a unit. For example, the disassociation timer field indicates a quantity of TBTTs after which a disassociation frame is sent.

Usually, the BTM request frame may be sent on any enabled uplink/downlink between the source AP MLD and the non-AP MLD. However, for different uplinks/downlinks between the source AP MLD and the non-AP MLD, TBTTs and timing synchronization functions (timing synchronization function, TSF) may be different. Therefore, when the BTM request frame is sent on any enabled uplink/downlink, the non-AP MLD may not learn of a TBTT of an uplink/downlink that is used as a unit of the association timer field and the validity interval field.

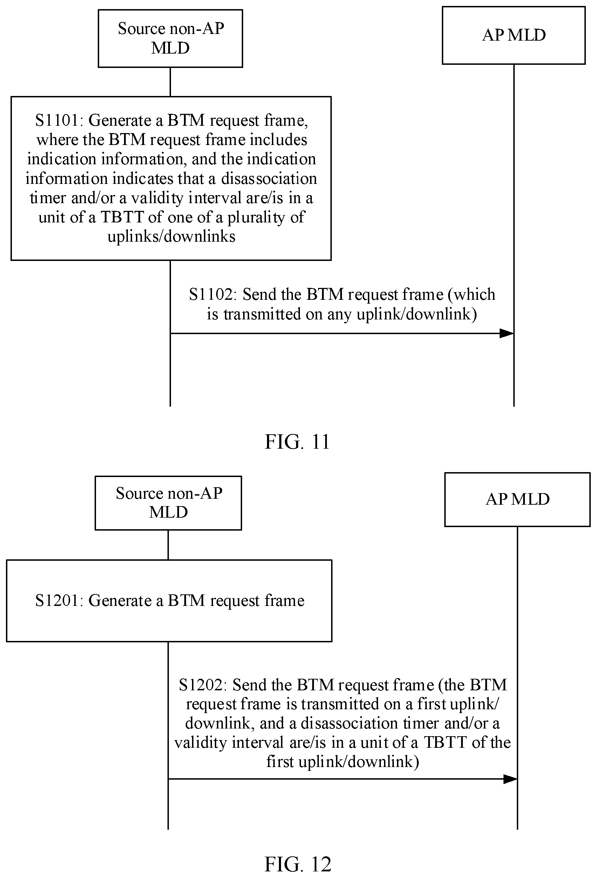

In view of this, this application provides the following two methods used in a BSS transition scenario. For example, a plurality of uplinks/downlinks are set up between a source AP MLD and a non-AP MLD. As shown in FIG. 11, the first method may include the following steps.

S1101: A source AP MLD generates a BTM request frame.

The BTM request frame includes indication information, and the indication information indicates that a disassociation timer and/or a validity interval in the BTM request frame are/is in a unit of a TBTT of one of a plurality of uplinks/downlinks.

Optionally, the indication information may be an identifier of one of the plurality of uplinks/downlinks, or a basic service set identifier (basic service set identifier, BSSID) corresponding to one of the plurality of uplinks/downlinks.

For example, an uplink/downlink A, an uplink/downlink B, and an uplink/downlink C are set up between the source AP MLD and the non-AP MLD. If a TBTT of the uplink/downlink C is used as a unit of the disassociation timer and/or the validity interval, the indication information may be an identifier of the uplink/downlink C or a BSSID corresponding to the uplink/downlink C.

S1102: The source AP MLD sends the BTM request frame to the non-AP MLD on any one of the plurality of uplinks/downlinks. Correspondingly, the non-AP MLD receives the BTM request frame from the source AP MLD on any uplink/downlink.

Correspondingly, based on the example in step S1101, the source AP MLD may send the BTM request frame to the non-AP MLD on any one of the uplink/downlink A, the uplink/downlink B, and the uplink/downlink C.

Based on this solution, the source AP MLD adds the indication information to the BTM request frame, to indicate that the disassociation timer and/or the validity interval in the BTM request frame are/is in a unit of a TBTT of one of the plurality of uplinks/downlinks. Therefore, the non-AP MLD can accurately obtain a time point of sending a disassociation frame, or a valid time of a BSS transition candidate list, to improve efficiency of BSS transition.

As shown in FIG. 12, the second method may include the following steps.

S1201: A source AP MLD generates a BTM request frame.

The indication information is not added to the BTM request frame. For example, a frame structure of the BTM request frame may be shown in FIG. 4b.

S1202: The source AP MLD sends the BTM request frame to a non-AP MLD on a first uplink/downlink of a plurality of uplinks/downlinks. Correspondingly, the non-AP MLD receives the BTM request frame from the source AP MLD on the first uplink/downlink.

A disassociation timer and/or a validity interval in the BTM request frame are/is in a unit of a TBTT of the first uplink/downlink of the plurality of uplinks/downlinks. In other words, the disassociation timer and/or the validity interval in the BTM request frame are/is in a unit of a TBTT of an uplink/downlink on which the BTM request frame is transmitted.

For example, an uplink/downlink A, an uplink/downlink B, and an uplink/downlink C are set up between the source AP MLD and the non-AP MLD. If a TBTT of the uplink/downlink C is used as a unit of the disassociation timer and/or the validity interval, the source AP MLD sends the BTM request frame to the non-AP MLD on the uplink/downlink C.

Based on this solution, the disassociation timer and/or the validity interval in the BTM request frame are/is in a unit of a TBTT of the uplink/downlink used to transmit the BTM request frame. Therefore, the non-AP MLD can accurately obtain a time point of sending a disassociation frame, or a valid time of a BSS transition candidate list based on the uplink/downlink on which the BTM request frame is received, to improve efficiency of BSS transition.

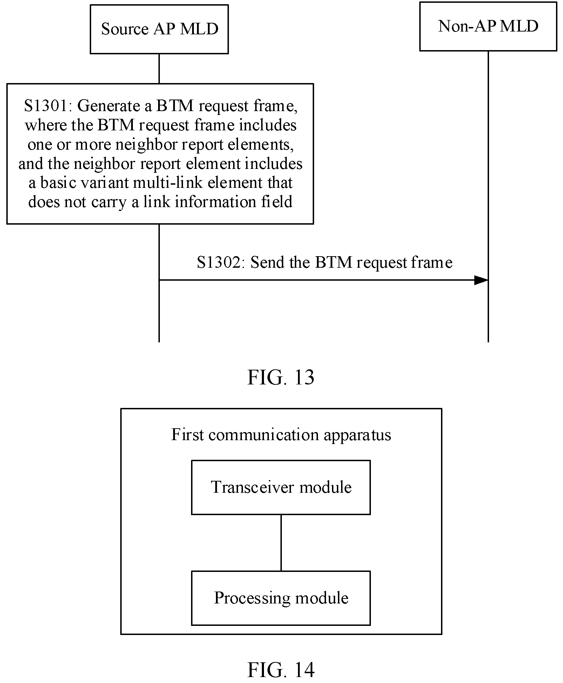

In addition, this application further provides a method to describe content carried in a neighbor report element carried in a BTM request frame and field setting. As shown in FIG. 13, the method includes the following steps.

S1301: A source AP MLD generates a BTM request frame.

The BTM request frame includes one or more neighbor report elements, and the neighbor report element indicates a candidate AP recommended by the source AP MLD to a non-AP MLD.

When the candidate AP belongs to a candidate AP MLD, or when the candidate AP is an affiliated AP of a candidate AP MLD, the neighbor report element may include a basic variant multi-link element as a subelement (subelement). The basic variant multi-link element includes a multi-link control field and a common information field, and does not include a link information field. For structures of the multi-link control field, the common information field, and the link information field, refer to the related descriptions in FIG. 2. Details are not described herein again.

S1302: The source AP MLD sends the BTM request frame to the non-AP MLD. Correspondingly, the non-AP MLD receives the BTM request frame from the source AP MLD.

Optionally, the source AP MLD may send the BTM request frame to the non-AP MLD on any uplink/downlink.

Based on this solution, because link information does not need to be obtained during BSS transition, the basic variant multi-link element does not carry the link information field. This can reduce signaling overheads, and does not affect BSS transition.

Optionally, in step S1301, an MLD MAC address present field in the multi-link control field may be set to a first value, and a first present field in the multi-link control field may be set to a second value. The first present field may include a link identifier information present field and a BSS parameters change count present field.

The first value indicates that a field is present in the common information field, and the second value indicates a field is not present in the common information field. For example, if the MLD MAC address present field is set to the first value, it indicates that an MLD MAC address field is present in the common information field. If the link identifier information present field is set to the second value, it indicates that a link identifier information field is not present in the common information field.

For example, the first value may be 1. Correspondingly, the second value may be 0. Alternatively, the first value may be 0. Correspondingly, the second value may be 1.

Optionally, when the BTM request frame includes a plurality of neighbor report elements, and candidate APs indicated by the plurality of neighbor report elements belong to a same candidate AP MLD, a second present field in a multi-link control field included in a first basic variant multi-link element is set to the first value, and a second present field in a multi-link control field included in a second basic variant multi-link element is set to the second value. The first basic variant multi-link element is a basic variant multi-link element included in a first neighbor report element of the plurality of neighbor report elements, the second basic variant multi-link element is a basic variant multi-link element included in a neighbor report element other than the first neighbor report element of the plurality of neighbor report elements.

For example, the BTM request frame includes three neighbor report elements, the three neighbor report elements respectively indicate a candidate AP 1, a candidate AP 2, and a candidate AP 3, and the candidate AP 1, the candidate AP 2, and the candidate AP 3 belong to a same candidate AP MLD. The first neighbor report element may be a neighbor report element indicating the candidate AP 1, and the first basic variant multi-link element is a basic variant multi-link element in the neighbor report element indicating the candidate AP 1. The second basic variant multi-link element includes a basic variant multi-link element in the neighbor report element indicating the candidate AP 2 and a basic variant multi-link element in the neighbor report element indicating the candidate AP 3.

Optionally, the second present field may include one or more of the following: a medium synchronization delay information present field, an EML capabilities present field, or an MLD present field.

Based on the solution, when the plurality of candidate APs indicated by the same BTM request frame belong to the same AP MLD, the first neighbor report element indicating that an affiliated AP of the AP MLD is the candidate AP carries the basic variant multi-link element, and the second present field in the multi-link control field included in the basic variant multi-link element is set to the first value, and the second present field in the multi-link control field included in the basic variant multi-link element in another neighbor report element indicating that an affiliated AP of the AP MLD is the candidate AP is set to the second value. Therefore, the BTM request frame only carries the fields (one or more of the medium synchronization delay information present field, the EML capabilities present field, or the MLD present field) indicated by the second present field once, to avoid repeatedly carrying a same field. This can reduce signaling overheads.

The foregoing describes the methods in embodiments of this application. The following describes a communication apparatus in embodiments of this application. The communication apparatus in embodiments of this application includes a first communication apparatus, a second communication apparatus, and a third communication apparatus. It should be understood that the first communication apparatus is the non-AP MLD in the method, and has any function of the non-AP MLD in the method. The second communication apparatus is the AP MLD in the method, and has any function of the AP MLD in the method. The third communication apparatus is the source AP MLD in the method, and has any function of the source AP MLD in the method.

As shown in FIG. 14, the first communication apparatus includes a processing module and a transceiver module.

The processing module is configured to generate a buffer report. The buffer report is used to request duration of direct transmission performed by a first affiliated non-access point station non-AP STA of a non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS.

The transceiver module is configured to send the buffer report to an AP MLD on a first uplink/downlink of a plurality of uplinks/downlinks.

Optionally, the processing module and the transceiver module in the first communication apparatus may have the following several relationships with the non-AP MLD:
(1) the processing module and the transceiver module are a processing module and a transceiver module in the first affiliated non-AP STA of the non-AP MLD;
(2) the processing module and the transceiver module are a central processing module and a central transceiver module in the non-AP MLD;
(3) the processing module is a processing module in the first affiliated non-AP STA of the non-AP MLD, and the transceiver module is a central transceiver module in the non-AP MLD; and
(4) the processing module is a central processing module in the non-AP MLD, and the transceiver module is a transceiver module in the first affiliated non-AP STA of the non-AP MLD.

It should be understood that the first communication apparatus provided in this embodiment of this application is the non-AP MLD in the method, and has any function of the non-AP MLD in the method shown in FIG. 7. For specific details, refer to the method. Details are not described herein again.

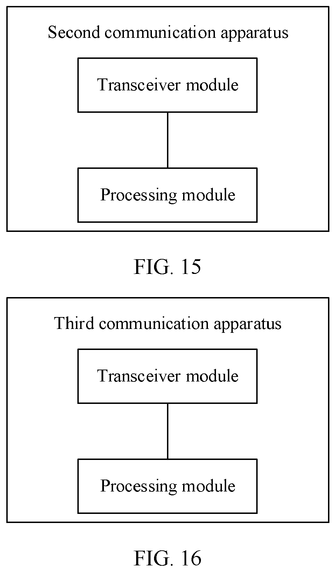

As shown in FIG. 15, the second communication apparatus includes a processing module and a transceiver module.

The transceiver module is configured to receive a buffer report from a non-AP MLD on a first uplink/downlink of a plurality of uplinks/downlinks. The buffer report is used to request duration of direct transmission performed by a first affiliated non-access point station non-AP STA of the non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS.

The processing module is configured to determine second transmission duration. The second transmission duration includes the duration, of direct transmission on the first direct link, that is allocated by an AP MLD to the first affiliated non-AP STA of the non-AP MLD.

The transceiver module is further configured to send first duration indication information. The first duration indication information indicates the second transmission duration.

Optionally, the processing module and the transceiver module in the second communication apparatus may have the following several relationships with the AP MLD:
(1) the processing module and the transceiver module are a processing module and a transceiver module in an affiliated AP, of the AP MLD, corresponding to the first direct link;
(2) the processing module and the transceiver module are a central processing module and a central transceiver module in the AP MLD;
(3) the processing module is a processing module in the affiliated AP, of the AP MLD, corresponding to the first direct link, and the transceiver module is a central transceiver module in the AP MLD; and
(4) the processing module is a central processing module in the AP MLD, and the transceiver module is a transceiver module in the affiliated AP, of the AP MLD, corresponding to the first direct link.

It should be understood that the second communication apparatus provided in this embodiment of this application is the AP MLD in the method, and has any function of the AP MLD in the method shown in FIG. 7. For specific details, refer to the method. Details are not described herein again.

As shown in FIG. 16, the third communication apparatus includes a processing module and a transceiver module.

The processing module is configured to generate a basic service set transition management BTM request frame. The BTM request frame includes indication information, and the indication information indicates that a disassociation timer and/or a validity interval in the BTM request frame are/is in a unit of a target beacon transmission time TBTT of one of a plurality of uplinks/downlinks. The transceiver module is configured to send the BTM request frame to a non-AP MLD on any one of the plurality of uplinks/downlinks.

Alternatively, the processing module is configured to generate a basic service set transition management BTM request frame. The transceiver module is configured to send the BTM request frame to a non-AP MLD on a first uplink/downlink of a plurality of uplinks/downlinks. A disassociation timer and/or a validity interval in the BTM request frame are/is in a unit of target beacon transmission time TBTT of the first uplink/downlink of the plurality of uplinks/downlinks.

Alternatively, the processing module is configured to generate a basic service set transition management BTM request frame. The BTM request frame includes one or more neighbor report elements, and the neighbor report element indicates a candidate access point AP recommended by a source AP MLD to a non-AP MLD. When the candidate access point belongs to a candidate AP MLD, the neighbor report element includes a basic variant multi-link element, and the basic variant multi-link element includes a multi-link control field and a common information field, and does not include a link information field. The transceiver module is configured to send the BTM request frame to the non-AP MLD.

Optionally, the processing module and the transceiver module in the third communication apparatus may have the following several relationships with the source AP MLD:
(1) the processing module and the transceiver module are a processing module and a transceiver module in an affiliated AP of the source AP MLD;
(2) the processing module and the transceiver module are a central processing module and a central transceiver module in the source AP MLD;
(3) the processing module is a processing module in an affiliated AP of the source AP MLD, and the transceiver module is a central transceiver module in the source AP MLD; and
(4) the processing module is a central processing module in the source AP MLD, and the transceiver module is a transceiver module in an affiliated AP of the source AP MLD.

It should be understood that the third communication apparatus provided in this embodiment of this application is the source AP MLD in the method, and has any function of the source AP MLD in the method shown in FIG. 11, FIG. 12, or FIG. 13. For specific details, refer to the method. Details are not described herein again.

The foregoing describes the first communication apparatus, the second communication apparatus, and the third communication apparatus in embodiments of this application. The following describes possible product forms of the first communication apparatus, the second communication apparatus, and the third communication apparatus. It should be understood that any form of product that has a feature of the first communication apparatus described in FIG. 14, any form of product that has a feature of the second communication apparatus described in FIG. 15, and any form of product that has a feature of the third communication apparatus described in FIG. 16 fall within the protection scope of this application. It should be further understood that the following descriptions are merely an example, and does not limit product forms of the first communication apparatus, the second communication apparatus, and the third communication apparatus in embodiments of this application.

As a possible product form, the first communication apparatus, the second communication apparatus, and the third communication apparatus described in embodiments of this application may be implemented by using a general bus architecture.

The first communication apparatus includes a processor and a transceiver that is internally connected to and communicates with the processor.

The processor is configured to generate a buffer report. The buffer report is used to request duration of direct transmission performed by a first affiliated non-access point station non-AP STA of a non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS.

The transceiver is configured to send the buffer report to the AP MLD on a first uplink/downlink of a plurality of uplinks/downlinks.

Optionally, the first communication apparatus may further include a memory. The memory is configured to store instructions to be executed by the processor.

The second communication apparatus includes a processor and a transceiver that is internally connected to and communicates with the processor.

The transceiver is configured to receive a buffer report from a non-AP MLD on a first uplink/downlink of a plurality of uplinks/downlinks. The buffer report is used to request duration of direct transmission performed by a first affiliated non-access point station non-AP STA of the non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS.

The processor is configured to determine second transmission duration. The second transmission duration includes the duration, of direct transmission on the first direct link, that is allocated by an AP MLD to the first affiliated non-AP STA of the non-AP MLD.

The transceiver is further configured to send first duration indication information. The first duration indication information indicates the second transmission duration.

Optionally, the second communication apparatus may further include a memory. The memory is configured to store instructions to be executed by the processor.

The third communication apparatus includes a processor and a transceiver that is internally connected to and communicates with the processor.

The processor is configured to generate a basic service set transition management BTM request frame. The BTM request frame includes indication information, and the indication information indicates that a disassociation timer and/or a validity interval in the BTM request frame are/is in a unit of a target beacon transmission time TBTT of one of a plurality of uplinks/downlinks. The transceiver is configured to send the BTM request frame to a non-AP MLD on any one of the plurality of uplinks/downlinks.

Alternatively, the processor is configured to generate a basic service set transition management BTM request frame. The transceiver is configured to send the BTM request frame to a non-AP MLD on a first uplink/downlink of a plurality of uplinks/downlinks. A disassociation timer and/or a validity interval in the BTM request frame are/is in a unit of target beacon transmission time TBTT of the first uplink/downlink of the plurality of uplinks/downlinks.

Alternatively, the processor is configured to generate a basic service set transition management BTM request frame. The BTM request frame includes one or more neighbor report elements, and the neighbor report element indicates a candidate access point AP recommended by a source AP MLD to a non-AP MLD. When the candidate access point belongs to a candidate AP MLD, the neighbor report element includes a basic variant multi-link element, and the basic variant multi-link element includes a multi-link control field and a common information field, and does not include a link information field. The transceiver is configured to send the BTM request frame to the non-AP MLD.

Optionally, the third communication apparatus may further include a memory. The memory is configured to store instructions to be executed by the processor.

As another possible product form, the first communication apparatus, the second communication apparatus, and the third communication apparatus described in embodiments of this application may be implemented by using a general-purpose processor.

The general-purpose processor that implements the first communication apparatus includes a processing circuit and an output interface that is internally connected to and communicates with the processing circuit.

The processing circuit is configured to generate a buffer report. The buffer report is used to request duration of direct transmission performed by a first affiliated non-access point station non-AP STA of a non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS.

The output interface is configured to send the buffer report to an AP MLD on a first uplink/downlink of a plurality of uplinks/downlinks.

Optionally, the general-purpose processor may further include a storage medium, and the storage medium is configured to store instructions executed by the processing circuit.

The general-purpose processor that implements the second communication apparatus includes a processing circuit and an output interface and an input interface that are internally connected to and communicate with the processing circuit.

The input interface is configured to receive a buffer report from a non-AP MLD on a first uplink/downlink of a plurality of uplinks/downlinks. The buffer report is used to request duration of direct transmission performed by a first affiliated non-access point station non-AP STA of the non-AP MLD on a first direct link, the first direct link is a link between a first target non-AP STA and the first affiliated non-AP STA of the non-AP MLD, and the first target non-AP STA and the first affiliated non-AP STA of the non-AP MLD belong to a same basic service set BSS.

The processing circuit is configured to determine second transmission duration. The second transmission duration includes the duration, of direct transmission on the first direct link, that is allocated by an AP MLD to the first affiliated non-AP STA of the non-AP MLD.

The output interface is further configured to send first duration indication information. The first duration indication information indicates the second transmission duration.

Optionally, the general-purpose processor may further include a storage medium, and the storage medium is configured to store instructions executed by the processing circuit.

The general-purpose processor that implements the third communication apparatus includes a processing circuit and an output interface that is internally connected to and communicates with the processing circuit.

The processing circuit is configured to generate a basic service set transition management BTM request frame. The BTM request frame includes indication information, and the indication information indicates that a disassociation timer and/or a validity interval in the BTM request frame are/is in a unit of a target beacon transmission time TBTT of one of a plurality of uplinks/downlinks. The output interface is configured to send the BTM request frame to a non-AP MLD on any one of the plurality of uplinks/downlinks.

Alternatively, the processing circuit is configured to generate a basic service set transition management BTM request frame. The output interface is configured to send the BTM request frame to a non-AP MLD on a first uplink/downlink of a plurality of uplinks/downlinks. A disassociation timer and/or a validity interval in the BTM request frame are/is in a unit of target beacon transmission time TBTT of the first uplink/downlink of the plurality of uplinks/downlinks.

Alternatively, the processing circuit is configured to generate a basic service set transition management BTM request frame. The BTM request frame includes one or more neighbor report elements, and the neighbor report element indicates a candidate access point AP recommended by a source AP MLD to a non-AP MLD. When the candidate access point belongs to a candidate AP MLD, the neighbor report element includes a basic variant multi-link element, and the basic variant multi-link element includes a multi-link control field and a common information field, and does not include a link information field. The output interface is configured to send the BTM request frame to the non-AP MLD.

Optionally, the general-purpose processor may further include a storage medium, and the storage medium is configured to store instructions executed by the processing circuit.

As still another possible product form, the first communication apparatus, the second communication apparatus, and the third communication apparatus described in embodiments of this application may further be implemented by using the following components: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described in this application.

It should be understood that the first communication apparatus, the second communication apparatus, and the third communication apparatus in the various product forms respectively have any function of the non-AP MLD, the AP MLD, and the source AP MLD in the method embodiments. Details are not described herein again.

A person of ordinary skill in the art may be aware that, in combination with the examples described in the embodiments disclosed in this specification, method steps and units can be implemented by electronic hardware, computer software, or a combination thereof. To clearly describe the interchangeability between the hardware and the software, the foregoing has generally described steps and composition of each embodiment based on functions. Whether the functions are executed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the described system, apparatus, and unit, reference may be made to a corresponding process in the method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the units may be implemented in an electrical form, a mechanical form, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and is sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A frame sending method for IEEE 802.11be, wherein the method is applied to a non-access point multi-link device, non-access point MLD, wherein the non-access point MLD includes a plurality of affiliated non-access point stations, non-access point STAs, a plurality of links are set up between the non-access point MLD and an access point multi-link device, access point MLD, and the method comprises:
generating (S701, S1001), by the non-access point MLD, a frame , wherein the frame is used to request duration of direct transmission performed by a first affiliated non-access point STA of the plurality of affiliated non-access point STAs on a first direct link, the first direct link is a link between a first target non-access point STA and the first affiliated non-access point STA of the plurality of affiliated non-access point STAs, and the frame includes traffic identifier, TID, information and transmission duration information; and
sending (S702, S1002), by the non-access point MLD, the frame to the access point MLD on a first link of the plurality of links; wherein the first link is any one of an uplink or a downlink, or the first link is both an uplink and a downlink; wherein the frame comprises link information, and the link information indicates the first direct link, and wherein the link information is an identifier of the first direct link or a bitmap.

2. The method according to claim 1, wherein the transmission duration information indicates first transmission duration, and the first transmission duration is the duration of direct transmission performed by the first affiliated non-access point STA of the non-access point MLD on the first direct link.

3. The method according to claim 1 or 2, wherein the first link is any one of the plurality of links.

4. The method according to any one of claims 1 to 3, wherein the frame further comprises buffer type information, and the buffer type information indicates that a buffer report corresponding to direct transmission.

5. A non-access point multi-link device, non-access point MLD, for IEEE 802.11be, wherein the non-access point MLD incldues a plurality of affiliated non-access point stations, non-access point STAs, and wherein a plurality of links are set up between the non-access point MLD and an access point multi-link device, access point MLD, and the non-access point MLD comprises a processing module and a transceiver module;
the processing module is configured to generate a frame, wherein the frame is used to request duration of direct transmission performed by a first affiliated non-access point station, non-access point STA of the plurality of affiliated non-access point STAs on a first direct link, the first direct link is a link between a first target non-access point STA and the first affiliated non-access point STA of the plurality of affiliated non-access point STAs and the frame includes traffic identifier, TID, information and transmission duration information; and
the transceiver module is configured to send the frame to the access point MLD on a first link of the plurality of links,
wherein the frame comprises link information, and the link information indicates the first direct link, and wherein the link information is an identifier of the first direct link or a bitmap.

6. The non-access point MLD according to claim 5, wherein the frame comprises transmission duration information, the transmission duration information indicates first transmission duration, and the first transmission duration is the duration of direct transmission performed by the first affiliated non-access point STA of the non-access point MLD on the first direct link.

7. The non-access point MLD according to claim 5 or 6, wherein the first link is any one of the plurality of links.

8. The non-access point MLD according to any one of claims 5 to 7, wherein the frame further comprises buffer type information, and the buffer type information indicates that a buffer report corresponding to direct transmission.

9. A computer-readable storage medium, configured to store a computer program, wherein the computer program comprises instructions used to implement the method according to any one of claims 1 to 4.

10. A computer program product, wherein the computer program product comprises instructions used to implement the method according to any one of claims 1 to 4.
